(19) Europäisches Patentamt
European Patent Office
Office européen des brevets

(11) EP 4 079 816 B1

(12) # EUROPEAN PATENT SPECIFICATION

(45) Date of publication and mention of the grant of the patent:
**31.12.2025 Bulletin 2026/01**

(21) Application number: **20903090.7**

(22) Date of filing: **16.11.2020**

(51) International Patent Classification (IPC):
***C09D 11/037*** *(2014.01)* ***B41M 5/26*** *(2006.01)*
***B42D 25/328*** *(2014.01)* ***B42D 25/382*** *(2014.01)*
***B42D 25/41*** *(2014.01)* ***B32B 7/023*** *(2019.01)*
***B32B 3/30*** *(2006.01)*

(52) Cooperative Patent Classification (CPC):
**B42D 25/41; B32B 7/12; B32B 9/045; B32B 9/06; B32B 27/304; B32B 27/36; B32B 27/365; B41M 5/26; B42D 25/324; B42D 25/328; B42D 25/351; B42D 25/382; C09D 11/037; C09D 11/50; G07D 7/1205;** (Cont.)

(86) International application number:
**PCT/JP2020/042661**

(87) International publication number:
**WO 2021/124759 (24.06.2021 Gazette 2021/25)**

(54) **LAMINATE AND METHOD**

LAMINAT UND VERFAHREN

STRATIFIÉ ET PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2019 JP 2019229108**

(43) Date of publication of application:
**26.10.2022 Bulletin 2022/43**

(73) Proprietor: **Dai Nippon Printing Co., Ltd.**
**Tokyo 162-8001 (JP)**

(72) Inventors:
- **MIN, Xin**
  **Tokyo 162-8001 (JP)**
- **YAMAUCHI, Tsuyoshi**
  **Tokyo 162-8001 (JP)**

(74) Representative: **Müller-Boré & Partner Patentanwälte PartG mbB**
**Friedenheimer Brücke 21**
**80639 München (DE)**

(56) References cited:

| | |
|---|---|
| **GB-A- 2 574 075** | **JP-A- 2000 309 154** |
| **JP-A- 2004 168 842** | **JP-A- 2010 536 970** |
| **JP-A- 2011 118 138** | **JP-A- 2015 166 878** |
| **JP-A- 2016 528 343** | **JP-A- 2019 038 255** |
| **US-A1- 2013 320 276** | **US-A1- 2015 375 485** |
| **US-A1- 2017 043 530** | **US-A1- 2018 361 776** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2255/10; B32B 2255/12; B32B 2255/20;
B32B 2307/412; B32B 2307/71; B32B 2425/00;
B41M 3/144

## Description

[Technical Field]

The present invention relates to a laminate including a near-infrared absorbing layer on which characters, images and the like that can be recognized by a near-infrared camera or the like can be printed or drawn (marked), and a related method.

[Background Art]

Recently, it has been a problem to improve security for data pages, identifications (IDs) such as identification papers, cards such as a credit cards and cash cards, paper currency and the like, and various proposals to prevent counterfeiting have been made.

Patent Literature 1 proposes a marking method of forming an infrared absorbing pattern by giving energy of laser light or the like to base material that contains ytterbium oxide. However, the infrared absorbency of ytterbium oxide is not sufficiently high, and there is also a problem about easiness to be handled.

In addition, anti-counterfeiting technologies using infrared absorbing material like in Patent Literatures 2 to 7 have also been proposed, but a problem remains in each of these technologies. For example, in Patent Literature 2, variable information is printed or the like by a printing method, and the following demerits exist:

- In the case of performing printing or transcription on a surface of a card, it is easy to perform falsification, and security decreases. Resistance such as abrasion resistance deteriorates.
- In the case of performing printing or transcription on a card middle layer, press working, card size finishing and the like are performed after personal information is printed (or issued), and, therefore, it is thought to be difficult to issue the card on the spot. Furthermore, if some problem occurs in the processing process, it is required to perform the process again from the first printing because personal information differs according to each individual.

Document JP 2019/038255 A discloses the preamble of claim 1 and describes a laminate including a first laminate material, a second laminate material, and a confidential printing portion formed between the first laminate material and the second laminate material with invisible ink. The confidential printing portion is configured to absorb electromagnetic radiation outside the range of visible light passing through at least one of the first laminate material and the second laminate material while hiding information in the visible range light.

Document US 2017/043530 A1 describes a multilayered article for laser marking comprising: a first layer having a visible transmission of greater than or equal to 80%; a second layer having a visible transmission of greater than or equal to 80%, and wherein the second layer comprises an active component that will form a laser mark with an L* of less than or equal to 40, when exposed to a laser light of a wavelength of greater than 800 nm; a third layer reflective to laser light having a wavelength greater than 800 nm, wherein the third layer has a visible transmission of greater than or equal to 80%; and optionally a substrate; wherein the article comprises a laser mark having an L* of less than or equal to 40 as measured according to CIELAB 1976 (specular included).

Document GB 2 574 075 A describes a Near Infrared (NIR) absorbing material.

[Citation List]

[Patent Literature]

[Patent Literature 1] Japanese Patent No. 4323578
[Patent Literature 2] Japanese Translation of PCT International Application Publication No. 2005-505444
[Patent Literature 3] Japanese Patent Laid-Open No. 2005-246821
[Patent Literature 4] Japanese Patent Laid-Open No. 2008-162233
[Patent Literature 5] Japanese Patent No. 6443597
[Patent Literature 6] Japanese Patent No. 6507096
[Patent Literature 7] Japanese Patent No. 6541400
[Patent Literature 8] Japanese Patent No. 6160830
[Patent Literature 9] Japanese Patent No. 5854329
[Patent Literature 10] International Publication No. WO 2018/151238
[Patent Literature 11] Japanese Patent No. 6167803

[Summary of Invention]

[Technical Problem]

In view of the above, a problem to be solved by the present invention is to provide a laminate on which information about a variable pictorial pattern or the like that is difficult to recognize with a common camera or naked eyes can be printed by laser light, a medium having a similar property and a related method.

[Solution to Problem]

The claimed invention is defined by the features set forth in the appended independent claims. Additional embodiments of the claimed invention are defined by the dependent claims.

[Advantageous Effects of Invention]

According to the present invention, by changing the infrared absorption performance of colorless infrared absorbing printed matter or a medium with laser light, it becomes possible to make printed matter or a medium with high security having a variable pictorial pattern or the like that is difficult to recognize with a common camera or naked eyes but can be visually recognized with an infrared visualization apparatus (an infrared camera) provided with a visible light spectrum cut filter. By making variable colorless infrared absorbing printed matter or medium, security is improved, and it becomes easy to make an authenticity judgment about arbitrary printed matter such as identification papers, cards and paper currency or a medium. Especially, by combining the present invention with a security technology for microdisplay printing such as micro characters, the security of infrared absorbing printed matter can be further improved.

[Brief Description of Drawings]

[Figure 1] Figure 1 is a diagram showing an observation image (a visible light image) of a laminate in a first embodiment under visible light.

[Figure 2] Figure 2 is a diagram showing an observation image (a near-infrared image) of the laminate in the first embodiment by a near-infrared camera (the external form of the laminate is drawn for the purpose of making the diagram easier to see; the same goes for other diagrams).

[Figure 3] Figure 3 is a diagram showing an example of a layer structure when an A-A' section obtained by cutting the laminate shown in Figure 1 along an A-A' line in Figure 1 is seen (seen from the bottom of Figure 1) (in order to show the layer structure, layers are drawn being separated from one another; the same goes for other drawings showing a layer structure).

[Figure 4] Figure 4 is a diagram showing another example of the layer structure when the A-A' section obtained by cutting the laminate shown in Figure 1 along the A-A' line in Figure 1 is seen (seen from the bottom of Figure 1).

[Figure 5] Figure 5 is a diagram (a near-infrared image) showing micro characters that are seen when enlarging a part of a microdisplay printed image in near-infrared absorbing ink shown in Figure 1.

[Figure 6] Figure 6 is a diagram (a near-infrared image) showing micro characters that are respectively seen at the time of enlarging a part of the printed image in the near-infrared absorbing ink and a part of a person image generated by laser marking (laser drawing), the printed image and the person image being shown in Figure 1.

[Figure 7] Figure 7 is a diagram (a near-infrared image) showing micro characters of a laminate of a second embodiment, the micro characters being generated by laser marking (laser printing).

[Figure 8] Figure 8 is a diagram showing a near-infrared image of a laminate in a third embodiment.

[Figure 9] Figure 9 is a diagram showing an observation image (a visible light image) of a laminate in a fourth embodiment of the present invention by visible light (a lenticular lens is illustrated for the purpose of making the diagram easier to see though it is transparent).

[Figure 10] Figure 10 is a diagram showing an example of a layer structure when an A-A' section obtained by cutting the laminate shown in Figure 9 along an A-A' line in Figure 9 is seen (seen from the bottom of Figure 9).

[Figure 11] Figure 11 is a diagram showing another example of the layer structure when the A-A' section obtained by cutting the laminate shown in Figure 9 along the A-A' line in Figure 9 is seen (seen from the bottom of Figure 9).

[Figure 12] Figure 12 is a diagram showing an example of a layer structure when a B-B' section obtained by cutting the laminate shown in Figure 9 along a B-B' line in Figure 9 is seen (seen from the right of Figure 9).

[Figure 13] Figure 13 is a diagram showing a near-infrared image when the laminate shown in Figure 9 is seen in the direction of an arrow C in Figure 12.

[Figure 14] Figure 14 is a diagram showing a near-infrared image when the laminate shown in Figure 9 is seen in the direction of an arrow D in Figure 12.

[Figure 15] Figure 15 is a diagram schematically describing the lenticular principle.

[Figure 16] Figure 16 is a diagram showing an observation image (a visible light image) of a laminate in a fifth embodiment by visible light.

[Figure 17] Figure 17 is a diagram showing an example of a layer structure when an A-A' section obtained by cutting the laminate shown in Figure 16 along an A-A' line in Figure 16 is seen (seen from the bottom of Figure 16).

[Figure 18] Figure 18 is a diagram showing a near-infrared image of the laminate shown in Figure 16.

[Figure 19] Figure 19 is a diagram schematically showing a configuration of a laser marker apparatus.

[Figure 20] Figure 20 is a diagram showing near-infrared images when cesium tungsten oxide-containing ink and ytterbium oxide-containing ink are observed by an infrared camera, and near-infrared images when pieces of printed matter obtained by offset printing the inks on base material are observed by the infrared camera.

[Figure 21] Figure 21 shows, for pieces of printed matter obtained by performing offset printing on various base materials with cesium tungsten oxide-containing ink, graphs showing results of measuring reflectances (before laser printing) within a range from the visible light region to the near-infrared region on printed surfaces before performing laser printing, and reflectances (after laser printing) within the range from the visible light region to the near-infrared region in areas where laser printing has been performed on the printed surfaces (results of measuring the reflectances on the printed surface sides (the inked sides) are shown; the same goes for other graphs).

[Figure 22] Figure 22 shows graphs of measurement results of using polycarbonate (PC) as the base material, which are extracted from the graphs in Figure 21.

[Figure 23] Figure 23 shows graphs of measurement results of using non-crystalline polyester (PET-G) as the base material, which are extracted from the graphs in Figure 21.

[Figure 24] Figure 24 shows graphs of measurement results of using polyvinyl chloride (PVC) as the base material, which are extracted from the graphs in Figure 21.

[Figure 25] Figure 25 shows graphs showing results of measuring reflectances within the range from the visible light region to the near-infrared region on printed surfaces at the time when offset printing was performed on fine-quality paper as base material with ink compositions with various cesium tungsten oxide contents (indicated by content rates; the unit is weight percent (wt%)).

[Figure 26] Figure 26 shows, for printed matter obtained by performing offset printing on polycarbonate (PC) as base material with lanthanum hexaboride-containing ink, graphs showing results of measuring reflectances (before laser printing) on a printed surface before performing laser printing within the range from the visible light region to the near-infrared region, and reflectances (after laser printing) in an area where laser printing has been performed on the printed surface of the printed matter within the range from the visible light region to the near-infrared region.

[Figure 27] Figure 27 is a diagram showing a layer configuration of a laminate at the time when only a near-infrared absorbing ink layer is formed on base material.

[Figure 28] Figure 28 is a diagram showing an observation image (a visible light image) of a medium in a sixth embodiment and a laminate in a seventh embodiment, under visible light.

[Figure 29] Figure 29 is a diagram showing an observation image (a near-infrared image) of the medium in the sixth embodiment of the present invention and the laminate in the seventh embodiment by the near-infrared camera.

[Figure 30] Figure 30 is a diagram showing an example of a structure when an A-A' section obtained by cutting the medium shown in Figure 28 (the sixth embodiment) along an A-A' line in Figure 28 is seen (seen from the bottom of Figure 28).

[Figure 31] Figure 31 is a diagram showing an example of a structure when the A-A' section obtained by cutting the laminate shown in Figure 28 (the seventh embodiment) along the A-A' line in Figure 28 is seen (seen from the bottom of Figure 28).

[Description of Embodiments]

A laminate, and a method that are illustrative embodiments will be described below with reference to drawings.

The embodiments 1-3 and 5-7 are not claimed, but they are useful for understanding the invention. Only the fourth embodiment, and variants inside the embodiments 6 and 7, are according to the invention.

However, the laminate, and the method according to the present invention are not limited to specific aspects described below, and it should be noted that they can be appropriately changed within the scope of the present invention as defined by the claims. It is not essential to form a near-infrared absorbing layer by offset printing. It is also possible to form the near-infrared absorbing layer by silk screen printing, gravure printing, flexographic printing, inkjet printing or the like (it is also not necessary that the printing is microdisplay printed). It is also not essential to form the near-infrared absorbing ink layer by printing, and the near-infrared absorbing ink layer, the colored ink layer and the like may be formed by the same method or by different methods.

In examples described later, it is shown that it is effective to use especially near-infrared (radiation) laser light as laser light, and description is made on the assumption that laser light is near-infrared laser light in each embodiment. However, laser light that can be used in the present invention is not limited thereto. That is, it is not essential to use near-infrared laser light by a near-infrared laser (example: a Nd:YAG laser, a $YVO_4$ laser, a fiber laser or the like) as laser light. It is also possible to use laser light by an ultraviolet laser (example: a THG laser or the like), a visible light laser (example: an SHG laser or the like), a far-infrared laser (example: a $CO_2$ laser) or the like.

In the embodiments below, "near-infrared radiation" is assumed to be an electromagnetic wave with a wavelength of 780 nm to 2000 nm (from "JIS Z 8117:2002 Glossary of Far Infrared Radiation Terms"). "Near-infrared laser light (near-infrared radiation laser light)" is assumed to be laser light with a wavelength within the wavelength range of the near-infrared radiation. Further, "visible light" is assumed to be an electromagnetic wave with a wavelength of 400 nm to 780 nm. In the embodiments below, "near-infrared absorbency" means a property of absorbing at least a part of radiated near-infrared radiation, and "near-infrared transparency" means a property of transmitting at least a part of radiated near-infrared radiation. Similarly, in the embodiments below, "visible light absorbency" means a property of absorbing at least a part of radiated visible light, and "visible light transparency" means a property of transmitting at least a part of radiated visible light. In the embodiments below, "laser marking" onto a near-infrared absorbing layer by near-infrared laser light means to draw (or write) some display content such as a pictorial pattern, characters, other information or the like, by radiating near-infrared laser light to the near-infrared absorbing layer to cause the absorption property of the near-infrared absorbing layer for near-infrared radiation to change.

(First embodiment)

Figure 1 is a diagram showing an observation image (a visible light image) of a laminate in a first embodiment by visible light. Though, in each of the present embodiment and subsequent embodiments, a laminate 1 is assumed to be printed matter for identifying an individual, such as identification papers, the laminate 1 is not limited thereto but may be made as an arbitrary laminate such as a card such as a credit card or a cash card, paper currency or the like. On a base material layer 8 (see Figure 3 and the like to be described later) of the laminate 1, a person image 2, person identification information 3 and a mark 4 are printed with near-infrared transmitting colored ink (visible light absorbing colored ink) such as UV SOYBI SG yellow (manufactured by DIC Graphics Corporation), UV SOYBI SG crimson (manufactured by DIC Graphics Corporation), UV SOYBI SG indigo (manufactured by DIC Graphics Corporation), UV 161 yellow S (manufactured by T&K TOKA CO., LTD), UV 161 crimson S (manufactured by T&K TOKA CO., LTD) and UV 161 indigo S (manufactured by T&K TOKA CO., LTD).

Figure 2 is a diagram showing an observation image (a near-infrared image) of the laminate in the first embodiment by a near-infrared camera (the external form of the laminate is drawn for the purpose of making the diagram easier to see; the same goes for other diagrams). By performing observation with a near-infrared camera, or the like, such an observation image can be obtained. In the observation image, a printed image 5 is formed by performing printing on the base material layer 8 with near-infrared absorbing ink that contains at least either cesium tungsten oxide or lanthanum hexaboride that is near-infrared absorbing material. As described later by showing experiment results, a near-infrared absorbing ink composition that contains cesium tungsten oxide or lanthanum hexaboride has a property that, by being irradiated with near-infrared laser light, the absorption rate for near-infrared radiation at least within a predetermined wavelength range decreases (the reflection rate increases). Therefore, by applying near-infrared laser light to a near-infrared absorbing ink layer formed by printing with such a near-infrared absorbing ink composition such that a character, an image (a drawing, a figure or the like) or the like is drawn (laser marking), the near-infrared absorbing property of the drawn part changes, and, therefore, a character, an image or the like that can be recognized with an infrared camera or the like are formed on the near-infrared absorbing ink layer.

A person image 6 is drawn by radiating near-infrared laser light on the printed image 5 such that a person is drawn by laser marking. Person identification information 7 is drawn by radiating near-infrared laser light on the printed image 5 such that identification information (a name, a personal identification number and the like) about the person is written by laser marking.

As a cesium tungsten oxide-containing ink composition, ink that contains cesium tungsten oxide indicated by a chemical formula (a general formula) $Cs_x W_y O_z$ can be used (each of x, y and z is a positive real number). In one example, ink that contains hexagonal-crystal-structured fine particles indicated by $Cs_{0.33}WO_3$, which is described in Patent Literature 8 (Japanese Patent No. 6160830) can be used. As a lanthanum hexaboride-containing ink composition, ink that contains fine particles indicated by a chemical formula $LaB_6$ can be used. The near-infrared absorbing ink contains a dispersant, a monomer, synthetic resins, an auxiliary agent and the like in addition to cesium tungsten oxide or lanthanum hexaboride. The content rate of cesium tungsten oxide in the cesium tungsten oxide-containing ink is arbitrary. In one example, it is shown by an example described later that the cesium tungsten oxide-containing ink has a favorable property when the content rate is 0.5 wt% (weight percent) to 6 wt%. Though the content rate of lanthanum hexaboride in the lanthanum hexaboride-containing ink is also arbitrary, and the content rate may be 0.05 wt% (weight percent) to 6 wt% in an example, it is shown by an example described later that the lanthanum hexaboride-containing ink has a favorable property when the content rate is 0.3 wt%. In the case of using near-infrared absorbing ink that contains both of cesium tungsten oxide and lanthanum hexaboride also, the content rate of each of the cesium tungsten oxide and the lanthanum hexaboride is similarly arbitrary. In any case, it is possible to change a favorable content rate according to print density (an amount of thickness). Note that "the content rate (wt%) of cesium tungsten oxide" stated here is a rate of the weight of cesium tungsten oxide contained in ink relative to the total weight of the ink and is indicated by the following:

Content rate (wt%) of cesium tungsten oxide in ink={(weight of cesium tungsten oxide)/(total weight ofink)}x100.

Similarly, "the content rate (wt%) of lanthanum hexaboride" is a rate of the weight of lanthanum hexaboride contained in ink relative to the total weight of the ink and is indicated by the following:

Content rate (wt%) of lanthanum hexaboride in ink={(weight of lanthanum hexaboride)/(total weight of ink)}x100.

Figure 3 is a diagram showing an example of a layer structure when an A-A' section obtained by cutting the laminate shown in Figure 1 along an A-A' line in Figure 1 is seen (seen from the bottom of Figure 1) (in order to show the layer structure, layers are drawn being separated from one another; the same goes for other drawings showing a layer structure).

The base material layer 8 is formed by sheet-shaped base material (a white sheet) made of material such as polyvinyl chloride (PVC), copolyester (PET-G), polycarbonate (PC), polyethylene terephthalate (PET) or polypropylene (PP). The base material layer 8 may be formed not as a white sheet but as a transparent sheet. In this case, the transparent sheet can be made of material such as polyvinyl chloride (PVC), copolyester (PET-G), polycarbonate (PC), polyethylene terephthalate (PET) or polypropylene (PP). When oversheet layers 11 and 12 are not used, the base material layer 8 may be paper base material (fine-quality paper, code paper or the like) (even when the oversheet layers 11 and 12 are used, it is possible to use the paper base material described above as the base material layer 8.) Further, the base material layer 8 may be such that contains either or both of cesium tungsten oxide and lanthanum hexaboride as near-infrared absorbing material. For example, at the time of molding the resin (plastic) sheet base material, such near-infrared absorbing base material can be made by a method of making a sheet such as extrusion molding or calendar molding, using resin to which the near-infrared absorbing material is added. Further, in the case of paper base material, such near-infrared absorbing paper base material can be made by adding near-infrared absorbing material to pulp (material) used for a papermaking process in advance to send the pulp to the papermaking process, adding near-infrared absorbing material to paint to be applied on the front side of paper in the papermaking process, in advance, or the like.

A colored ink layer 9 is formed on the base material layer 8. The colored ink layer 9 is formed by printing the person image 2, the person identification information 3 and the mark 4 on the base material layer 8 with near-infrared transmitting colored ink as already described. A method for forming the colored ink layer 9 is arbitrary, and a printing method, for example, letterpress printing, offset printing, inkjet printing or the like, or any other arbitrary formation method can be used. Instead of the colored ink layer 9 or in addition to the colored ink layer 9, a fluorescent ink layer 9 may be formed with near-infrared transmitting fluorescent ink such as UV Fluorescent Medium B (manufactured by T&K TOKA CO., LTD), UV Fluorescent Medium Y (manufactured by T&K TOKA CO., LTD) or UV Fluorescent Medium R (manufactured by T&K TOKA CO., LTD). The fluorescent ink layer 9 can be formed by performing printing or the like on the base material layer 8 similarly to the colored ink layer 9, with a fluorescent ink composition, and a person image, person identification information and the like can be printed similarly to the case of colored ink printing. Alternatively, instead of the colored ink layer 9 or the fluorescent ink layer 9, or in addition to at least one of them, a near-infrared transmitting hologram layer 9 like a transparent hologram may be formed.

On the base material layer 8, a near-infrared absorbing ink layer 10 is formed in a manner of at least partially overlapping with the colored ink layer 9 (or the fluorescent ink layer, the hologram layer or the like; the same goes for other descriptions). As already described, the near-infrared absorbing ink layer 10 is formed by printing the printed image 5 on the base material layer 8 with near-infrared absorbing ink. However, the near-infrared absorbing ink layer 10 may be formed by an arbitrary formation method other than printing. It is not essential that the colored ink layer 9 and the near-infrared absorbing ink layer 10 at least partially overlap with each other. The layers may be formed on the base material layer 8 being completely separated from each other. Furthermore, when the colored ink layer 9 and the near-infrared absorbing ink layer 10 at least partially overlap with each other, it is arbitrary which layer is located higher. In addition to being formed on the base material layer 8 as shown in Figures 3, 4 and the like, the colored ink layer 9 and the near-infrared absorbing ink layer 10 may be formed, for example, on any or both of back surfaces (surfaces on the base material layer 8 side) of the oversheet layers 11 and 12 or these layers 9 and 10 may be formed on the back surface (a surface on the oversheet layer 11 side) of the base material layer 8 (the formations are not shown here).

As the top layer of the laminate 1, the oversheet layer (a transparent sheet) 12 having visible light transparency and near-infrared transparency is formed; and, as the bottom layer of the laminate 1, the oversheet layer (a transparent sheet) 11 having visible light transparency and near-infrared transparency is formed. As for the oversheet layers 11 and 12, for example, two polyvinyl chloride (PVC) with a thickness of about 0.05 mm to 0.2 mm are prepared. Then, by laminating one sheet at a time on each of the bottom and top layers of the laminate 1, on which the oversheet layers 11 and 12 are not formed yet, respectively, and fusing the sheets by applying heat and pressure, the laminate 1 can be formed. As another example, by laminating two arbitrary transparent films on the top and bottom of the laminate 1, on which the oversheet layers 11 and 12 are not formed yet, and gluing the transparent films using adhesive between layers, the laminate 1 may be formed. As already described, it is not essential to form the oversheet layers 11 and 12. Any one of the oversheet layers 11 and 12 may be formed, or the laminate 1 may be made without forming either of the oversheet layers. Laser marking on the printed image 5 may be performed either from the bottom layer side or top layer side of the laminate 1. In the case of performing laser marking from the bottom layer side, that is, in the case of performing laser marking via the base material layer 8, near-infrared transmitting material is used as the material of the base material layer 8. Any or both of the oversheet layers 11 and 12 may be near-infrared absorbing oversheet layers that contain any or both of cesium tungsten oxide and lanthanum hexaboride as near-infrared absorbing materials (for example, even if the oversheet layer 12 that overlaps with the near-infrared absorbing ink layer 10 is a near-infrared absorbing oversheet layer, laser marking on the near-infrared absorbing ink layer 10 is possible if all radiated (near-infrared) laser light is not absorbed by the oversheet layer 12, and at least a part thereof is transmitted through the oversheet layer 12 and reaches the near-infrared absorbing ink layer 10.). For example, at the time of molding the resin (plastic) sheet base material, such a near-infrared absorbing oversheet layer can be made by a method of making a sheet such as extrusion molding or calendar molding, using resin to which the near-infrared absorbing material is added.

Figure 5 is a diagram (a near-infrared image) showing micro characters that are seen when enlarging a part of the printed image in near-infrared absorbing ink shown in Figure 1. As seen from enlarged display of a part 13 of the printed image 5 shown in Figure 5, the printed image 5 includes micro characters 14 (the micro characters 14 are not shown in Figure 2; in the subsequent diagrams also, microdisplay of micro characters and the like are appropriately omitted.). The printed image 5 may be printed, including security design such as a rosette, a micro symbol, a relief pattern or a combination thereof instead of micro characters. By performing printing (microdisplay printing), including a microdisplay object, such as a micro character, which is difficult to reproduce by a copying machine or the like (a display object that is so small that cannot be visually confirmed by naked eyes; for example, fine characters, a symbol or a figure in addition to micro characters; the "micro characters" stated here are not limited to characters with a size in μm (micrometer) (characters with

a diameter, width or height smaller than 1 mm), characters with a diameter, width or height equal to or more than 1 mm may be called "micro characters"; the same goes for sizes of other microdisplay objects), it is possible to enhance the anti-counterfeiting effect of the laminate 1. Especially, if micro characters and the like with such a line width and character size that are difficult to reproduce by laser marking (laser printing) described later are included, the anti-counterfeiting effect of the laminate 1 becomes extremely high.

Figure 6 is a diagram (a near-infrared image) showing micro characters that are seen at the time of enlarging a part of the printed image in the near-infrared absorbing ink and a part of the person image generated by laser marking (laser writing), the printed image and the person image being shown in Figure 1. Micro characters 15 are micro characters formed at the time of printing (microdisplay printing) of the printed image 5 with near-infrared absorbing ink, and a part thereof remains even after laser marking of the person image 6 is performed. Micro characters 16 are micro characters formed at the time of printing of the printed image 5 with the near-infrared absorbing ink. In one example, the entire printed image 5 is formed by at least one of a micro character, a rosette, a micro symbol, a relief pattern and the like (security design; though the size of each individual characters etc. such as micro character, micro symbol or the like is arbitrary, the maximum diameter, the maximum width or the maximum height can be 1000 micrometers ($\mu$m (micrometer)) in one example). Therefore, pictorial patterns of the person image 6, the person identification information 7 and the like drawn by laser marking are also security design when seen being enlarged by a near-infrared camera or the like. By adopting such a configuration, it is possible to further improve the anti-falsification and anti-counterfeiting effects of the laminate 1.

(Second embodiment)

Figure 7 is a diagram (a near-infrared image) showing micro characters of a laminate of a second embodiment, the micro characters being generated by laser marking (laser printing). The layer structure of the laminate 1 in Figure 7 may be similar to that of the first embodiment (see Figures 3 and 4), and micro characters 17 are written on the near-infrared absorbing ink layer 10 by laser marking. The laminate 1 is different from the first embodiment only in that the person identification information 7 is not laser-marked like Figure 2 (however, the content indicated by the micro characters 17 may be the same as the content indicated by the person identification information 7 in Figure 2.).

(Third embodiment)

Figure 8 is a diagram showing a near-infrared image of a laminate in a third embodiment. Unlike the laminate 1 of the first embodiment, a mark 18 is printed by printing on the base material layer 8 with near-infrared absorbing ink in a manner of overlapping with the mark 4 in colored ink printing (see Figure 1) (the near-infrared absorbing ink layer 10; however, the mark 18 may be formed with near-infrared absorbing ink mixed with colored ink; such a layer formed with ink obtained by adding another ingredient such as colored ink to near-infrared absorbing ink is also called "a near-infrared absorbing ink layer" here; the same goes for the other embodiments.). A person image 19 is drawn by laser marking on the mark 18. In other points, the laminate in the third embodiment is similar to the laminate of the first embodiment, and the layer structure may be similar in both embodiments. The near-infrared absorbing ink layer (a near-infrared absorbing layer) may contain a near-infrared absorbing ink composition mixed with a near-infrared transmitting colored ink, a near-infrared absorbing ink composition mixed with a near-infrared transmitting fluorescent ink composition, or a near-infrared absorbing ink composition mixed with both of the near-infrared transmitting colored ink and fluorescent ink compositions. Further, the near-infrared absorbing ink composition may include a colored ink composition that contains near-infrared absorbing material that contains any or both of cesium tungsten oxide and lanthanum hexaboride, a fluorescent ink composition that contains such near-infrared absorbing material, or both of the colored ink and fluorescent ink compositions that contain such near-infrared absorbing material.

(Fourth embodiment)

Figure 9 is a diagram showing an observation image (a visible light image) of a laminate in a fourth embodiment of the present invention by visible light (a lenticular lens is illustrated for the purpose of making the diagram easier to see though it is transparent.). Figure 10 is a diagram showing an example of a layer structure when an A-A' section obtained by cutting the laminate shown in Figure 9 along an A-A' line in Figure 9 is seen (seen from the bottom of Figure 9); and Figure 11 is a diagram showing another example of the layer structure when the A-A' section obtained by cutting the laminate shown in Figure 9 along the A-A' line in Figure 9 is seen (seen from the bottom of Figure 9). Unlike the first embodiment shown in Figure 1 and the like, a lenticular lens 20 is formed on an area on the surface of the oversheet layer 12 on the opposite side of the near-infrared absorbing ink layer 10, the area at least partially overlapping with the near-infrared absorbing ink layer 10 (though the area completely overlaps in Figures 10 and 11, only a part thereof may overlap). The layer structure in Figures 10 and 11 may be similar to the layer structure in Figures 3 and 4 except that the lenticular lens 20 is formed.

Figure 12 is a diagram showing an example of a layer structure when a B-B' section obtained by cutting the laminate shown in Figure 9 along a B-B' line in Figure 9 is seen (seen from the right of Figure 9). The lenticular lens 20, which is an example of a plurality of convex optical element parts, has such a shape that, when seen in a direction shown in Figure 12, the plurality convex lens parts look like being lined up (along a vertical direction (the B-B' line) in Figure 9). Though ten convex lens parts are drawn being lined up in Figure 12, this is display for convenience to simplify and describe the structure of the lenticular lens. The lenticular lens 20 may be formed in a manner of including more, for example, about one hundred convex lens parts in one example. Or alternatively, the number of convex lens parts may be smaller. Generally, the lenticular lens 20 can be formed such that an arbitrary number of multiple convex lens parts are included. As a method for forming the lenticular lens 20 on the oversheet layer 12, a lenticular lens that is already made may be glued onto the oversheet layer 12 with adhesive or the like, or the oversheet layer 12 may be formed by heat and pressure so as to have a shape to function as the lenticular lens 20. Lenticular lens base material may be formed on the oversheet layer 12 by a printing method and fixed by a method such as UV curing.

When seeing display of a pictorial pattern, characters or the like drawn by laser marking on the near-infrared absorbing ink layer 10 with a near-infrared camera or the like, different display (a near-infrared image) can be seen, depending on in which direction it is seen. When the display is seen in the direction of an arrow C in Figure 12, a near-infrared image shown in Figure 13 can be seen; and, when the display is seen in the direction of an arrow D in Figure 12, a near-infrared image shown in Figure 14 can be seen. In the example in Figure 12, a printed image 21 is printed on the base material layer 8 with near-infrared absorbing ink (the near-infrared absorbing ink layer 10) such that the printed image 21 overlaps with the lenticular lens 20. A person image 22 shown in Figure 13 is drawn on the near-infrared absorbing ink layer 10 by laser marking of radiating near-infrared laser light in the direction (angle) of the arrow C in Figure 12, and person identification information 23 shown in Figure 14 is drawn on the near-infrared absorbing ink layer 10 by laser marking of radiating near-infrared laser light in the direction (angle) of the arrow D in Figure 12. The person image 22 can be recognized by viewing the near-infrared absorbing ink layer 10 in the direction of the arrow C in Figure 12 with a near-infrared camera or the like, and the person identification information 23 can be recognized by viewing the near-infrared absorbing ink layer 10 in the direction of the arrow D in Figure 12 with the near-infrared camera or the like. That is, a latent pictorial pattern can be visually confirmed by changing an observation angle, and near-infrared absorbing multiple laser images (MLI) can be realized.

Figure 15 is a diagram schematically describing the lenticular principle (it is not necessary to correspond to the specific configuration described using Figures 10 to 14.). When the near-infrared absorbing ink layer 10 is seen though the lenticular lens 20 from a first position P1 by an infrared camera or the like, pictorial patterns or the like drawn on a plurality of printing parts IM1 are combined, and a first display (pictorial pattern) like the person image 22 can be recognized. When the near-infrared absorbing ink layer 10 is seen though the lenticular lens 20 from a second position P2 by the infrared camera or the like, pictorial patterns or the like drawn on a plurality of printing parts IM2 are combined, and a second display (pictorial pattern) like the person identification information 23 can be recognized.

(Fifth embodiment)

Figure 16 is a diagram showing an observation image (a visible light image) of a laminate in a fifth embodiment by visible light, and Figure 17 is a diagram showing an example of a layer structure when an A-A' section obtained by cutting the laminate shown in Figure 16 along an A-A' line in Figure 16 is seen (seen from the bottom of Figure 16). On the base material layer 8, a clear window 24 is formed, the clear window 24 being made of transparent material such as polyvinyl chloride (PVC), amorphous polyester (PET-G), polycarbonate (PC), polyethylene terephthalate (PET) or polypropylene (PP) (see Figure 16 for its two-dimensional shape; in the configuration in Figure 17, the clear window 24 belongs to the base material layer 8). In one example, the clear window 24 may be made by causing a part of the base material layer 8 to open to fit to the shape of the clear window 24, pouring, into space generated thereby, transparent resin with visible light transparency and near-infrared transparency and curing the transparent resin. Further, the clear window 24 may be made by fitting transparent resin with visible light transparency and near-infrared transparency and with the same size as the opened part of the base material layer 8. As for the configuration other than that concerning the clear window 24, the laminate of the fifth embodiment may be similar to the laminate of the first embodiment.

In the laminate 1 of the fifth embodiment, the near-infrared absorbing ink layer 10 is formed in a manner of overlapping with the clear window 24 (Figure 17). Therefore, when the clear window 24 is seen from above with a near-infrared camera or the like (the direction from the oversheet layer 11 toward the oversheet 12 in the layer structure in Figure 17 is defined as "an upward direction", and a direction opposite to the direction is defined as "a downward direction" (the same goes for the other embodiments); see Figure 16 also; here, the clear window 24 is seen from further above the oversheet layer 12), the printed image 5 printed as the near-infrared absorbing ink layer 10 and the person image 6 drawn on the printed image 5 by laser marking can be recognized (Figure 18). In the space generated by cutting out a part of the base material layer 8 to form the clear window 24, the hologram layer described above as an embedded hologram or display matter with some security may be arranged (these also belong to the base material layer 8).

Figure 19 is a diagram schematically showing a configuration of a laser marker apparatus for performing the laser marking (drawing, printing and the like) described so far. A laser marker apparatus 25 is provided with a control unit 26, a storage unit 27, a driving (scanning) unit 28, a laser light radiation unit 29 and the like. By the head of the laser light radiation unit 29 being driven by the driving unit 28, and near-infrared laser light being radiated from the head to a near-infrared absorbing layer, the laser marking described above to the near-infrared absorbing layer (the near-infrared absorbing ink layer 10) is performed. In such operation of the laser marker apparatus 25, while the driving unit 28, which is a driving device provided with a motor and the like and is controlled by the control unit 26 provided with a CPU or various kinds of control circuits and the like such as a built-in control circuit (a separate computer outside the laser marker apparatus 25 may function as the control unit 26), is driving the head of the laser light radiation unit 29 (moving the head (scanning)) above the near-infrared absorbing layer (above the oversheet layer 12 with near-infrared transparency; if the base material layer 8, the oversheet layer 11 or the like has near-infrared transparency, however, driving the head below the near-infrared absorbing layer, that is, below the oversheet layer 11 is also possible), the laser light radiation unit 29 (in one example, a laser light radiation device provided with an Nd:YAG laser, which is a device to generate laser light with a laser wavelength of 1064 nm, and provided with various kinds of equipment for radiating laser light to a target, such as the head) radiates near-infrared laser light (which may be a near-infrared laser beam) from the head toward the near-infrared absorbing layer. In the storage unit 27 provided with a storage device such as a semiconductor memory or a magnetic disk, various kinds of data that the control unit 26 appropriately reads and uses to control operation of the laser marker apparatus 25, such as characters, images and the like to be drawn by laser marking, are stored. The laser marker apparatus 25 draws the characters, images and the like stored in the storage unit 27 on the near-infrared absorbing layer. The laser marker apparatus is not described here in more details because there are many publicly known laser marker apparatuses.

[Examples]

Hereinafter, experiment results for various laminates (offset printed matter) made with cesium tungsten oxide-containing ink and lanthanum hexaboride-containing ink, which are examples of the present invention, will be described in comparison with experiment results for offset printed matter made using ytterbium oxide-containing ink as a comparison example.

(Comparison example 1)

By mixing 3N5 ytterbium oxide (III) powder and an ink medium that contains a monomer, synthetic resin and other non-infrared absorbing materials such that the weight ratio between the ytterbium oxide and the ink medium becomes 25:75, ink with a ytterbium oxide content of 25 wt% was made. On a partial area of fine-quality paper, which is base material, printing was performed by an offset printing machine (an offset printability tester IGT C1 (manufactured by IGT Testing Systems K.K.)) with the ytterbium oxide-containing ink that was made as described above. With obtained printed matter as a laminate of a comparison example 1, photographing was performed by VSC8000 (manufactured by Foster + Freeman LTD.), which is an infrared visualization apparatus, in a state that the camera lens of the apparatus is equipped with a filter for cutting light with a wavelength equal to or below 925 nm.

(Example 1)

By mixing dispersing liquid that contains cesium tungsten oxide $Cs_{0.33}WO_3$ and an ink medium similar to that of the comparison example 1, which contains a monomer, synthetic resin and other non-infrared absorbing materials such that the weight ratio between the cesium tungsten oxide and all the other ingredients becomes 2:98, ink with a cesium tungsten oxide content of 2 wt% was made. On a partial area of fine-quality paper, which is base material, printing was performed by an offset printing machine (the offset printability tester IGT C1 (manufactured by IGT Testing Systems K.K.)) with the cesium tungsten oxide-containing ink that was made as described above. With obtained printed matter as a laminate of an example 1, photographing was performed by VSC8000 (manufactured by Foster + Freeman LTD.), which is an infrared visualization apparatus, in a state that the camera lens of the apparatus is equipped with a filter for cutting light with a wavelength equal to or below 925 nm.

Figure 20 shows infrared pictures obtained by photographing the ytterbium oxide-containing ink and the cesium tungsten oxide-containing ink made in the comparison example 1 and the example 1 by the infrared camera, and infrared pictures obtained by photographing pieces of printed matter obtained by performing offset printing as described above using the inks, respectively. Though it is understood from the pictures of the inks that both of the ytterbium oxide-containing ink and the cesium tungsten oxide-containing ink show near-infrared absorbency, the near-infrared absorbency could not be visually confirmed in the printed matter obtained by performing offset printing of the ytterbium oxide-containing ink. On the other hand, in the printed matter obtained by performing offset printing of the cesium tungsten oxide-containing ink, the content of cesium tungsten oxide being low, a light/dark difference could be visually confirmed between an area where printing was not performed and an area where printing was performed, and it was recognized that the area where printing was performed had the near-infrared absorbency.

The above experiment results are summarized in the table below.

[Table 1]

| | Comparison example 1 | Example 1 |
|---|---|---|
| Pigment | Ytterbium oxide | Cesium tungsten oxide |
| Content | 25 wt% | 2 wt% |
| Film thickness | About 1 μm (micrometer) to about 3 μm (micrometer) | About 1 μm (micrometer) to about 3 μm (micrometer) |
| Infrared absorption rate | Unknown (not visually confirmable) | 30%-40% |

In the above table, "film thickness" refers to the film thickness of the ytterbium oxide-containing ink layer or the cesium tungsten oxide-containing ink layer formed by offset printing. These are, however, not measured values but reference values on the assumption of typical film thicknesses formed in offset printing. The film thickness formed by offset printing in each example described later is also estimated to be from about 1 μm (micrometer) to about 3 μm (micrometer). For all the examples in the present specification, experiments were performed in a state that conditions such as print density and the like are similar, and the film thicknesses are thought to be theoretically similar. The "infrared absorption rate" in the example 1 is a value (the absorption rate (%)=100 --reflectance (%)) obtained using a reflectance (a rate of strength of reflected light when radiated light is reflected on the surface of printed matter and is a ratio of strength of reflected light from the surface of target printed matter relative to strength of reflected light from the surface of base material serving as a reference (a reference part)) measured with a JASCO V-670 ultraviolet-visible-near-infrared spectrophotometer (manufactured by JASCO Corporation).

Next, offset printing was performed on various base material sheets with near-infrared absorbing ink with a cesium tungsten oxide ($Cs_{0.33}WO_3$) content (content rate) of 2 wt%; laser printing was performed on each piece of printed matter that was made, by the laser marker apparatus; and reflectances for electromagnetic waves in the wavelength range from visible light to near-infrared radiation for a part where printing was performed and a part where printing was not performed were measured for each piece of printed matter. The "reflectance" in the examples below refers to a rate of strength of reflected light when radiated light is reflected on the surface of printed matter similarly to the example 1 and is a ratio of strength of reflected light from the surface of target printed matter relative to strength of reflected light from the surface of base material to be a reference (a reference part) (a value obtained by measurement using the JASCO V-670 ultraviolet-visible-near-infrared spectrophotometer (manufactured by JASCO Corporation)).

The "reflectance" in the example 1 above and examples 2 to 11 below can be generally defined by the following formula:

Reflectance (%) of target part (target surface)={(strength of reflected light from target part (target surface))/(strength of reflected light from reference part (reference surface))}x100

(Example 2)

By mixing dispersing liquid that contains cesium tungsten oxide $Cs_{0.33}WO_3$, a monomer, synthetic resins, an auxiliary agent and the like such that the weight ratio between the cesium tungsten oxide and all the other ingredients becomes 2:98, ink with a cesium tungsten oxide content of 2 wt% was made. On a polycarbonate (PC) sheet, which is base material, printing was performed by an offset printing machine (the offset printability tester IGT C1 (manufactured by IGT Testing Systems K.K.)) with the cesium tungsten oxide-containing ink that was made as described above. With obtained printed matter as a laminate of an example 2, reflectances for the visible light to the near-infrared radiation with wavelengths of 400 nm to 2000 nm on the printed surface before laser printing was performed were measured using the JASCO V-670 ultraviolet-visible-near-infrared spectrophotometer (manufactured by JASCO Corporation). Furthermore, as the laser marker apparatus, the following is used:

IDENTIFIER 60 (manufactured by Mühlbauer);

and laser printing was performed on the printed surface described above with laser light by an Nd:YAG laser with a wavelength of 1064 nm. Reflectances for the visible light to the near-infrared radiation with wavelengths of 400 nm to 2000 nm on a part where laser printing was performed were measured using the JASCO V-670 ultraviolet-visible-near-infrared spectrophotometer (manufactured by JASCO Corporation).

(Example 3)

By mixing dispersing liquid that contains cesium tungsten oxide $Cs_{0.33}WO_3$, a monomer, synthetic resins, an auxiliary agent and the like such that the weight ratio between the cesium tungsten oxide and all the other ingredients becomes 2:98, ink with a cesium tungsten oxide content of 2 wt% was made. On a copolyester (PET-G) sheet, which is base material, printing was performed by an offset printing machine (the offset printability tester IGT C1 (manufactured by IGT Testing Systems K.K.)) with the cesium tungsten oxide-containing ink that was made as described above. With obtained printed matter as a laminate of an example 3, reflectances for the visible light to the near-infrared radiation with wavelengths of 400 nm to 2000 nm on the printed surface before laser printing was performed were measured using the JASCO V-670 ultraviolet-visible-near-infrared spectrophotometer (manufactured by JASCO Corporation). Furthermore, as the laser marker apparatus, the following is used: IDENTIFIER 60 (manufactured by Mühlbauer); and laser printing was performed on the printed surface described above with laser light by the Nd:YAG laser with a wavelength of 1064 nm. Reflectances for the visible light to the near-infrared radiation with wavelengths of 400 nm to 2000 nm on a part where laser printing was performed were measured using the JASCO V-670 ultraviolet-visible-near-infrared spectrophotometer (manufactured by JASCO Corporation).

(Example 4)

By mixing dispersing liquid that contains cesium tungsten oxide $Cs_{0.33}WO_3$, a monomer, synthetic resins, an auxiliary agent and the like such that the weight ratio between the cesium tungsten oxide and all the other ingredients becomes 2:98, ink with a cesium tungsten oxide content of 2 wt% was made. On a polyvinyl chloride (PVC) sheet, which is base material, printing was performed by an offset printing machine (the offset printability tester IGT C1 (manufactured by IGT Testing Systems K.K.)) with the cesium tungsten oxide-containing ink that was made as described above. With obtained printed matter as a laminate of an example 4, reflectances for the visible light to the near-infrared radiation with wavelengths of 400 nm to 2000 nm on the printed surface before laser printing was performed were measured using the JASCO V-670 ultraviolet-visible-near-infrared spectrophotometer (manufactured by JASCO Corporation). Furthermore, as the laser marker apparatus, the following is used:
IDENTIFIER 60 (manufactured by Mühlbauer);
and laser printing was performed on the printed surface described above with laser light by the Nd:YAG laser with a wavelength of 1064 nm. Reflectances for the visible light to the near-infrared radiation with wavelengths of 400 nm to 2000 nm on a part where laser printing was performed were measured using the JASCO V-670 ultraviolet-visible-near-infrared spectrophotometer (manufactured by JASCO Corporation).

Results of the reflectance measurements performed in the above examples 2 to 4 are shown in Figure 21. Results of the reflectance measurements performed in the example 2, results of the reflectance measurements performed in the example 3 and results of the reflectance measurements performed in the example 4 are extracted from graphs in Figure 21 and shown in Figures 22, 23 and 24, respectively. For each of the graphs in Figures 21 to 24, each value of the horizontal axis indicates a wavelength (nm) of an electromagnetic wave, and each value of the vertical axis indicates a reflectance (%) of an electromagnetic wave with a wavelength indicated by a value of the horizontal axis on a printed surface or on a part where laser printing was performed.

As is apparent from the graphs in Figures 21 to 24, it is seen that, no matter which base material is used, the reflectance increases (the absorption rate decreases) in the near-infrared region by performing laser printing. Though the amount of increase differs according to the wavelength of the horizontal axis, it is read that, in a near-infrared region of 780 nm to 2000 nm, the reflectance is increased by laser printing by at least 5%, generally by about 10% to 15% or by more. As an overall tendency, change in the reflectance before and after laser printing in the visible light wavelength range is small in comparison with change in the reflectance before and after laser printing in the near-infrared region, and, therefore, it is thought that, by laser printing, characters, images and the like that are difficult to visually confirm by naked eyes or a common camera can be drawn by laser printing.

Next, offset printing was performed on pieces of fine-quality paper as base material sheets with six kinds of near-infrared absorbing inks with mutually different cesium tungsten oxide ($Cs_{0.33}WO_3$) contents (content rates) of 0.5 wt% to 6 wt%, respectively, and reflectances for electromagnetic waves within the wavelength range from the visible light to the near-infrared radiation on the printed surfaces (near-infrared absorbing ink layers) of pieces of printed matter that were made were measured. Equipment used for reflectance definition and reflectance measurement is the same as the equipment in the examples 1 to 4 described above.

(Examples 5 to 10)

Six kinds of inks with cesium tungsten oxide contents of 0.5 wt% to 6 wt% were made by mixing dispersing liquid that contains cesium tungsten oxide $Cs_{0.33}WO_3$, a monomer, synthetic resins, an auxiliary agent and the like such that the weight ratio between the cesium tungsten oxide and all the other ingredients becomes:

(Example 5) 0.5:99.5;
(Example 6) 1:99;
(Example 7) 1.3:98.7;
(Example 8) 2:98;
(Example 9) 3:97; and
(Example 10) 6:94.

On the fine-quality paper sheet described above, which is base material, printing was performed by an offset printing machine (the offset printability tester IGT C1 (manufactured by IGT Testing Systems K.K.)) with each of the cesium tungsten oxide-containing inks that were made as described above. With obtained six kinds of pieces of printed matter as laminates of the examples 5 to 10, reflectances for the visible light to the near-infrared radiation with wavelengths of 400 nm to 2000 nm were measured using the JASCO V-670 ultraviolet-visible-near-infrared spectrophotometer (manufactured by JASCO Corporation).

Results of the reflectance measurements performed in the above examples 5 to 10 are shown in Figure 25. For each of the graphs in Figure 25, each value of the horizontal axis indicates a wavelength (nm) of an electromagnetic wave, and each value of the vertical axis indicates a reflectance (%) of an electromagnetic wave with a wavelength indicated by a value of the horizontal axis on a printed surface. It is seen that, as the cesium tungsten oxide content is larger, the reflectance at the same wavelength is lower (the absorption rate is higher) at least within the wavelength range of the near-infrared radiation. A similar tendency can be read for the wavelength range of the visible light. That is, as the cesium tungsten oxide content of ink is increased, an image or the like obtained by performing offset printing with the ink becomes easy to be recognized with a near-infrared camera or the like. In this case, however, the visible light reflectance also becomes lower, and the possibility that the image or the like can be visually confirmed by naked eyes, a common camera or the like also becomes higher. Therefore, in view of security, it is thought to be preferable to select an appropriate cesium tungsten oxide content.

Next, offset printing was performed on polycarbonate (PC) as a base material sheet with near-infrared absorbing ink with a lanthanum hexaboride ($LaB_6$) content (content rate) of 0.3 wt%; laser printing was performed on printed matter that was made, by the laser marker apparatus; and each reflectances for electromagnetic waves within the wavelength range from the visible light to the near-infrared radiation for a part where printing was performed and a part where printing was not performed were measured. In this example also, the reflectance refers to a rate of strength of reflected light when radiated light is reflected on the surface of printed matter similarly to the example 1 and is a ratio of strength of reflected light from the surface of target printed matter relative to strength of reflected light from the surface of base material to be a reference (a reference part) (a value obtained by measurement using the JASCO V-670 ultraviolet-visible-near-infrared spectrophotometer (manufactured by JASCO Corporation)).

(Example 11)

By mixing dispersing liquid that contains lanthanum hexaboride($LaB_6$), a monomer, synthetic resins, an auxiliary agent and the like such that the weight ratio between the lanthanum hexaboride and all the other ingredients becomes 0.3:99.7, ink with a lanthanum hexaboride content of 0.3 wt% was made. On a polycarbonate (PC) sheet, which is base material, printing was performed by an offset printing machine (the offset printability tester IGT C1 (manufactured by IGT Testing Systems K.K.)) with the lanthanum hexaboride-containing ink that was made as described above. With obtained printed matter as a laminate of an example 11, reflectances for the visible light to the near-infrared radiation with wavelengths of 400 nm to 2000 nm on the printed surface before laser printing was performed were measured using the JASCO V-670 ultraviolet-visible-near-infrared spectrophotometer (manufactured by JASCO Corporation). Furthermore, as the laser marker apparatus, the following is used:
IDENTIFIER 60 (manufactured by Mühlbauer); and laser printing was performed on the printed surface described above with laser light by the Nd:YAG laser with a wavelength of 1064 nm. Reflectances for the visible light to the near-infrared radiation with wavelengths of 400 nm to 2000 nm on a part where laser printing was performed were measured using the JASCO V-670 ultraviolet-visible-near-infrared spectrophotometer (manufactured by JASCO Corporation).

Results of the reflectance measurements performed in the above example 11 are shown in Figure 26. For each of the graphs in Figure 26, each value of the horizontal axis indicates a wavelength (nm) of an electromagnetic wave, and each value of the vertical axis indicates a reflectance (%) of an electromagnetic wave with a wavelength indicated by a value of the horizontal axis on a printed surface or on a part where laser printing was performed.

As is apparent from the graphs in Figure 26, it is seen that the reflectance increases (the absorption rate decreases) in the near-infrared region by performing laser printing. Though the amount of increase differs according to the wavelength of the horizontal axis, it is read that, in a near-infrared region of 780 nm to 1400 nm, the reflectance is increased by laser printing by generally about 5% to 14%. As an overall tendency, change in the reflectance before and after laser printing in the visible light wavelength range is small in comparison with change in the reflectance before and after laser printing in a near-infrared region of about 800 nm to 1200 nm, and, therefore, it is thought that, by laser printing, characters, images and the like that are difficult to visually confirm by naked eyes or a common camera can be drawn by laser printing.

(Sixth embodiment)

Figure 28 is a diagram showing an observation image (a visible light image) of a medium according to a sixth embodiment and a laminate in a seventh embodiment, under visible light, and Figure 29 is a diagram showing an observation image (a near-infrared image) of the medium in the sixth embodiment and the laminate in the seventh embodiment by a near-infrared camera. First, a medium 1 of the sixth embodiment will be described.

Figure 30 is a diagram showing an example of a structure when an A-A' section obtained by cutting the medium shown in Figure 28 (the sixth embodiment) along an A-A' line in Figure 28 is seen (seen from the bottom of Figure 28). The medium 1 is configured as the near-infrared absorbing base material 8 that contains any or both of cesium tungsten oxide and lanthanum hexaboride as near-infrared absorbing materials. For example, at the time of molding the resin (plastic) sheet base material, such near-infrared absorbing base material can be made by a method of making a sheet such as extrusion molding or calendar molding, using resin to which the near-infrared absorbing material is added. Further, in the case of paper base material, such near-infrared absorbing paper base material can be made by adding near-infrared absorbing material to pulp (material) used for a papermaking process in advance to send the pulp to the papermaking process, adding near-infrared absorbing material to paint to be applied on the front side of paper in the papermaking process, in advance, or the like. In view of the experiment results described using Figures 20 to 26, it is thought that, by applying laser light to a target part of the near-infrared absorbing base material 8 that contains cesium tungsten oxide or lanthanum hexaboride, the near-infrared absorbency of the target part also decreases at least within a predetermined wavelength range (for example, the near-infrared region of 780 nm to 2000 nm in the case of base material that contains cesium tungsten oxide, and, for example, the near-infrared region of 780 nm to 1400 nm in the case of base material that contains lanthanum hexaboride) similarly to the case of performing printing on base material with a near-infrared absorbing ink composition that contains cesium tungsten oxide or lanthanum hexaboride. Therefore, it is thought that, by performing laser marking by radiating (near-infrared) laser light to the near-infrared absorbing base material layer 8 such that characters, symbols, a pictorial pattern and the like are written (drawn) similarly to the first to fifth embodiments and then photographing what is obtained with a near-infrared camera or the like to observe a near-infrared image, the characters, symbols, the pictorial pattern and the like written (drawn) by the laser marking can be confirmed.

Figure 29 shows an example of such a near-infrared image. Since the medium 1 is configured with the near-infrared absorbing base material 8, an area where laser marking is not performed has near-infrared absorbency and is observed dark in the near-infrared image. On the other hand, as for the person image 6 and the person identification information 7 drawn by laser marking, the near-infrared absorbency of the drawn parts (target parts) has decreased, and, therefore, near-infrared light radiated from a near-infrared camera is transmitted through the target parts and reflected, for example, by an object behind the medium 1 (if the medium 1 is placed on a stand, the stand) and enters the near-infrared camera. Thus, the person image 6 and the person identification information 7 are observed bright in the near-infrared image. In a visible light image observed by a visible light camera, it is impossible (Figure 28) or at least difficult to visually confirm the person image 6 and the person identification information 7 formed by laser marking.

In the example in Figure 30, description has been made on the assumption that the medium 1 is configured with only one layer of the near-infrared absorbing base material 8. However, as for the medium 1 according to the sixth embodiment, an arbitrary layer such as a colored ink layer (or a fluorescent ink layer or a hologram layer), a near-infrared absorbing ink layer, an oversheet layer or the like may be further formed on the near-infrared absorbing base material 8 (for example, the lenticular lens already described may be formed on the oversheet layer, which would be according to the present invention), and, as the base material layer of the laminate according to each of the first to fifth embodiments described above and the seventh embodiment described later, the near-infrared absorbing base material described above may be used.

(Seventh embodiment)

Next, the laminate 1 of the seventh embodiment will be described. As already described, a diagram showing an observation image (a visible light image) of the laminate in the seventh embodiment under visible light is Figure 28, and a diagram showing an observation image (a near-infrared image) of the laminate in the seventh embodiment by a near-infrared camera is Figure 29.

Figure 31 is a diagram showing an example of a structure when the A-A' section obtained by cutting the laminate shown in Figure 28 (the seventh embodiment) along the A-A' line in Figure 28 is seen (seen from the bottom of Figure 28). The laminate 1 is provided with the base material layer 8 (which may be sheet-shaped base material (a white sheet) used in the example 1 and the like, which is made of material such as polyvinyl chloride (PVC), copolyester (PET-G), polycarbonate (PC), polyethylene terephthalate (PET) or polypropylene (PP) and the like, may be formed as a transparent sheet or may be the near-infrared absorbing base material of the sixth embodiment), and the oversheet layers 11 and 12 formed as layers above and below the laminate 1, and the oversheet layers 11 and 12 are configured as near-infrared absorbing oversheet layers that contain any or both of cesium tungsten oxide and lanthanum hexaboride as near-infrared absorbing materials. For example, at the time of molding the resin (plastic) sheet base material, such a near-infrared absorbing oversheet layer can be made by a method of making a sheet such as extrusion molding or calendar molding, using resin to which the near-infrared absorbing material is added. By laminating one near-infrared absorbing oversheet layer on each of the top surface and bottom surface of the base material layer 8 and fusing the sheets by applying heat and pressure, the laminate 1 can be formed. Only any one of the oversheet layers 11 and 12 may be a near-infrared absorbing oversheet layer, or only any one of the oversheet layers 11 and 12 may be formed as a near-infrared absorbing oversheet (an oversheet layer may be provided only one surface of the base material layer 8).

In view of the experiment results described using Figures 20 to 26, it is thought that, by applying laser light to target parts of the oversheet layers 11 and 12 that contain cesium tungsten oxide or lanthanum hexaboride, the near-infrared absorbency of the target parts also decreases at least within a predetermined wavelength range (for example, the near-infrared region of 780 nm to 2000 nm in the case of base material that contains cesium tungsten oxide, and, for example, the near-infrared region of 780 nm to 1400 nm in the case of base material that contains lanthanum hexaboride), similarly to the case of performing printing on base material with a near-infrared absorbing ink composition that contains cesium tungsten oxide or lanthanum hexaboride. Therefore, it is thought that, by performing laser marking by radiating (near-infrared) laser light to the near-infrared absorbing oversheet layers 11 and 12 such that characters, symbols, a pictorial pattern and the like are written (drawn) similarly to the first to fifth embodiments and then photographing a result with a near-infrared camera or the like to observe a near-infrared image, the characters, the symbols, the pictorial pattern and the like written (drawn) by laser marking can be confirmed.

Figure 29 shows an example of such a near-infrared image (assumed to be a near-infrared image obtained by performing laser marking on the near-infrared absorbing oversheet layer 12 and photographing the surface of the laminate 1 on the oversheet layer 12 side with a near-infrared camera or the like, for convenience). Since the oversheet layer 12 contains cesium tungsten oxide or lanthanum hexaboride as near-infrared absorbing material, an area where laser marking is not performed has near-infrared absorbency and is observed dark in the near-infrared image. On the other hand, as for the person image 6 and the person identification information 7 drawn by laser marking, the near-infrared absorbency of the drawn parts (target parts) has decreased, and, therefore, near-infrared light radiated from a near-infrared camera is transmitted through the target parts and reflected, for example, by the base material layer 8 behind the near-infrared absorbing oversheet layer 12 and enters the near-infrared camera. Thus, the person image 6 and the person identification information 7 are observed bright in the near-infrared image. In a visible light image observed by a visible light camera, it is impossible (Figure 28) or at least difficult to visually confirm the person image 6 and the person identification information 7 formed by laser marking.

In the example in Figure 31, description has been made on the assumption that the laminate 1 is configured with three layers of the base material layer 8 and the oversheet layers 11 and 12. However, in the laminate 1 according to the seventh embodiment, at least one of the oversheet layers 11 and 12 may be formed after further forming an arbitrary layer such as a colored ink layer (or a fluorescent ink layer or a hologram layer), a near-infrared absorbing ink layer or the like on the base material layer 8. Alternatively, for example, the lenticular lens already described may be formed on at least one of the oversheet layers 11 and 12, which would be according to the present invention. As at least one of the oversheet layers 11 and 12 of the laminate according to each of the first to fifth embodiments described above, the near-infrared absorbing oversheet layer described above may be used.

(Example of use purpose)

The laminate and the medium in each of the above embodiments and examples can be used as high-security printed matter such as identification papers in one example. By comparing the person image 2 and the person identification information 3 by colored ink printing in Figure 1 (which can be visually confirmed by naked eyes) with the person image 6 and the person identification information 7 drawn by laser marking in the printed image 5 in near-infrared absorbing ink (which can be recognized by a near-infrared camera or the like) to judge whether a person indicated by the person image 2 and the person identification information 3 (visible information) and a person indicated by the person image 6 and the person identification information 7 (infrared information) correspond to each other, it is possible to make an authenticity judgment about identification papers or the like (it is possible to decide that the identification papers or the like are genuine if the persons correspond and decide that the identification papers or the like are not genuine if the persons do not correspond) and, if the identification or the like is counterfeited, see through the counterfeiting.

A pictorial pattern drawn by a laser is not only a monotonous pattern such as a bar code, a number or a two-dimensional code but may be a person image or the like as described above. Further, by combining the present invention with the security technology for microdisplay printing such as micro characters, the security of infrared absorbing printed matter can be further improved.

[Industrial Applicability]

The present invention is applicable to identifications such as identification papers, cards such as credit cards and cash cards, paper currency and the like and is also applicable to an arbitrary laminate or medium without being limited to the above.

[Reference Signs List]

1 Laminate (printed matter) or medium
2 Person image (colored ink printing, fluorescent ink printing or hologram)
3 Person identification information (colored ink printing, fluorescent ink printing or hologram)
4 Mark (colored ink printing, fluorescent ink printing or hologram)
5 Printed image (near-infrared absorbing ink printing)
6 Person image (laser marking)
7 Person identification information (laser marking)
8 Base material layer (white sheet) or near-infrared absorbing base material
9 Colored ink layer, fluorescent ink layer or hologram layer
10 Near-infrared absorbing ink layer
11, 12 Oversheet layer (transparent sheet or near-infrared absorbing oversheet)
13 Part of printed image (near-infrared absorbing ink printing)
14 Micro characters included in printed image (near-infrared absorbing ink printing)
15 Micro characters (near-infrared absorbing ink printing)
16 Micro characters (near-infrared absorbing ink printing)
17 Micro characters (laser marking)
18 Mark (near-infrared absorbing ink printing)
19 Person image (laser marking)
20 Lenticular lens
21 Printed image (near-infrared absorbing ink printing)
22 Person image (laser marking)
23 Person identification information (laser marking)
24 Clear window (transparent resin)
25 Laser marker apparatus
26 Control unit
27 Storage unit
28 Driving (scanning) unit
29 Laser radiation unit
IM1 Printing part (laser marking)
IM2 Printing part (laser marking)

**Claims**

**1.** Alaminate (1) comprising:

a base material layer (8);
a near-infrared absorbing layer (10) formed with a near-infrared absorbing ink composition that contains near-infrared absorbing material; wherein
the near-infrared absorbing material contains cesium tungsten oxide or lanthanum hexaboride, and, by applying laser light to a target part of the near-infrared absorbing layer (10), near-infrared absorbency of the target part at least within a predetermined wavelength range is reduced, and
an oversheet layer (11, 12) with near-infrared transparency, the oversheet layer (11, 12) being formed in a manner of overlapping with the near-infrared absorbing layer (10),
**characterised in that**

a plurality of convex optical element parts (20) are formed in an area on a surface of the oversheet layer (11, 12) on an opposite side of the near-infrared absorbing layer (10), the area at least partially overlapping with the near-infrared absorbing layer (10).

**2.** The laminate (1) according to claim 1, wherein, on the base material layer (8), print using a near-infrared transmitting colored ink composition or fluorescent ink composition is made such that the print at least partially overlaps with the near-infrared absorbing layer (10).

**3.** The laminate (1) according to claim 1 or 2, wherein the near-infrared absorbing ink composition includes a colored ink composition or fluorescent ink composition that contains the near-infrared absorbing material.

**4.** The laminate (1) according to any one of claims 1 to 3, further comprising a near-infrared transmitting hologram layer (9) formed such that the hologram layer (9) at least partially overlaps with the near-infrared absorbing layer (10).

**5.** The laminate (1) according to any one of claims 1 to 4, wherein the base material layer (8) contains the near-infrared absorbing material.

**6.** The laminate (1) according to claim 1, further comprising a near-infrared absorbing oversheet layer (11, 12) that contains the near-infrared absorbing material, the near-infrared absorbing oversheet layer (11, 12) being formed in a manner of overlapping with the near-infrared absorbing layer (10).

**7.** A method **characterized in that** the method is for a laminate (1) comprising:

a base material layer (8), and
a near-infrared absorbing layer (10) formed with a near-infrared absorbing ink composition that contains near-infrared absorbing material, the near-infrared absorbing material containing cesium tungsten oxide or lanthanum hexaboride,
wherein laser light is applied to a target part of the near-infrared absorbing layer (10) so that near-infrared absorbency of the target part at least within a predetermined wavelength range is reduced, wherein the laminate (1) further comprises an oversheet layer (11, 12) with near-infrared transparency, the oversheet layer (11, 12) being formed in a manner of overlapping with the near-infrared absorbing layer (10), and
wherein a plurality of convex optical element parts (20) are formed in an area on a surface of the oversheet layer (11, 12) of the laminate (1) on an opposite side of the near-infrared absorbing layer (10), the area at least partially overlapping with the near-infrared absorbing layer (10).

**8.** The method according to claim 7, wherein the laser light is applied to the target part so that a reflectance of the target part for near-infrared radiation at least within a predetermined wavelength range is increased by 5% or more.

**9.** The method according to claim 7 or 8, wherein, on the base material layer (8) of the laminate, print using a near-infrared transmitting colored ink composition or fluorescent ink composition is made such that the print at least partially overlaps with the near-infrared absorbing layer (10).

**10.** The method according to any one of claims 7 to 9, wherein the near-infrared absorbing ink composition includes a colored ink composition or fluorescent ink composition that contains the near-infrared absorbing material.

**11.** The method according to any one of claims 7 to 10, wherein the laminate (1) further comprises a near-infrared transmitting hologram layer (9) formed such that the hologram layer (9) at least partially overlaps with the near-infrared absorbing layer (10).

**12.** The method according to any one of claims 7 to 11, wherein the base material layer (8) contains the near-infrared absorbing material.

**13.** The method according to claim 7, wherein the laminate (1) further comprises a near-infrared absorbing oversheet layer (11, 12) that contains the near-infrared absorbing material, the near-infrared absorbing oversheet layer (11, 12) being formed in a manner of overlapping with the near-infrared absorbing layer (10).

**Patentansprüche**

1. Laminat (1), umfassend:

   eine Basismaterialschicht (8);
   eine Nahinfrarot-Absorptionsschicht (10), die mit einer Nahinfrarot-Absorptionstintenzusammensetzung gebildet ist, die Nahinfrarot-Absorptionsmaterial enthält; wobei
   das Nahinfrarot-Absorptionsmaterial Cäsiumwolframoxid oder Lanthanhexaborid enthält und durch Aufbringen von Laserlicht auf einen Zielteil der Nahinfrarot-Absorptionsschicht (10) ein Nahinfrarot-Absorptionsvermögen des Zielteils zumindest innerhalb eines vorbestimmten Wellenlängenbereichs reduziert wird, und
   eine Deckschicht (11, 12) mit Nahinfrarot-Transparenz, wobei die Deckschickt (11, 12) so ausgebildet ist, dass sie mit der Nahinfrarot-Absorptionsschicht (10) überlappt,
   **dadurch gekennzeichnet, dass** eine Mehrzahl von konvexen optischen Elementteilen (20) in einem Bereich auf einer Fläche bzw. Oberfläche der Deckschicht (11, 12) auf einer gegenüberliegenden bzw. entgegengesetzten Seite der Nahinfrarot-Absorptionsschicht (10) ausgebildet sind, wobei der Bereich zumindest teilweise mit der Nahinfrarot-Absorptionsschicht (10) überlappt.

2. Laminat (1) nach Anspruch 1, wobei auf der Basismaterialschicht (8) ein Druck unter Verwendung einer Nahinfrarot-durchlässigen Farbtintenzusammensetzung oder Fluoreszenztintenzusammensetzung so gemacht ist, dass der Druck zumindest teilweise mit der Nahinfrarot-Absorptionsschicht (10) überlappt.

3. Laminat (1) nach Anspruch 1 oder 2, wobei die Nahinfrarot-Absorptionstintenzusammensetzung eine Farbtintenzusammensetzung oder Fluoreszenztintenzusammensetzung beinhaltet, die das Nahinfrarot-Absorptionsmaterial enthält.

4. Laminat (1) nach einem der Ansprüche 1 bis 3, umfassend eine Nahinfrarot-durchlässige Hologrammschicht (9), die so ausgebildet ist, dass die Hologrammschicht (9) zumindest teilweise mit der Nahinfrarot-Absorptionsschicht (10) überlappt.

5. Laminat (1) nach einem der Ansprüche 1 bis 4, wobei die Basismaterialschicht (8) das Nahinfrarot-Absorptionsmaterial enthält.

6. Laminat (1) nach Anspruch 1, ferner umfassend eine Nahinfrarot-Absorptionsdeckschicht (11, 12), die das Nahinfrarot-Absorptionsmaterial enthält, wobei die Nahinfrarot-Absorptionsdeckschicht (11, 12) auf überlappende Weise mit der Nahinfrarot-Absorptionsschicht (10) ausgebildet ist.

7. Verfahren, **dadurch gekennzeichnet, dass** das Verfahren für ein Laminat (1) ist, das umfasst:

   eine Basismaterialschicht (8) und
   eine Nahinfrarot-Absorptionsschicht (10), die mit einer Nahinfrarot-Absorptionstintenzusammensetzung gebildet ist, die Nahinfrarot-Absorptionsmaterial enthält, wobei das Nahinfrarot-Absorptionsmaterial Cäsiumwolframoxid oder Lanthanhexaborid enthält,
   wobei Laserlicht auf einen Zielteil der Nahinfrarot-Absorptionsschicht (10) aufgebracht wird, sodass ein Nahinfrarot-Absorptionsvermögen des Zielteils zumindest innerhalb eines vorbestimmten Wellenlängenbereichs reduziert wird,
   wobei das Laminat (1) ferner eine Deckschicht (11, 12) mit Nahinfrarot-Transparenz umfasst, wobei die Deckschickt (11, 12) auf überlappende Weise mit der Nahinfrarot-Absorptionsschicht (10) ausgebildet ist, und wobei eine Mehrzahl von konvexen optischen Elementteilen (20) in einem Bereich auf einer Fläche bzw. Oberfläche der Deckschicht (11, 12) des Laminats (1) auf einer gegenüberliegenden bzw. entgegengesetzten der Nahinfrarot-Absorptionsschicht (10) ausgebildet sind, wobei der Bereich zumindest teilweise mit der Nahinfrarot-Absorptionsschicht (10) überlappt.

8. Verfahren nach Anspruch 7, wobei das Laserlicht so auf den Zielteil aufgebracht wird, dass eine Reflexion bzw. ein Reflexionsgrad des Zielteils für Nahinfrarotstrahlung zumindest innerhalb eines vorbestimmten Wellenlängenbereichs um 5 % oder mehr erhöht wird.

9. Verfahren nach Anspruch 7 oder 8, wobei auf der Basismaterialschicht (8) des Laminats ein Druck unter Verwendung einer Nahinfrarot-durchlässigen Farbtintenzusammensetzung oder Fluoreszenztintenzusammensetzung so gemacht wird, dass der Druck zumindest teilweise mit der Nahinfrarot-Absorptionsschicht (10) überlappt.

**10.** Verfahren nach einem der Ansprüche 7 bis 9, wobei die Nahinfrarot-Absorptionstintenzusammensetzung eine Farbtintenzusammensetzung oder Fluoreszenztintenzusammensetzung beinhaltet, die das Nahinfrarot-Absorptionsmaterial enthält.

**11.** Verfahren nach einem der Ansprüche 7 bis 10, wobei das Laminat (1) ferner eine Nahinfrarot-durchlässige Hologrammschicht (9) umfasst, die so ausgebildet ist, dass die Hologrammschicht (9) zumindest teilweise mit der Nahinfrarot-Absorptionsschicht (10) überlappt.

**12.** Verfahren nach einem der Ansprüche 7 bis 11, wobei die Basismaterialschicht (8) das Nahinfrarot-Absorptionsmaterial einhaltet.

**13.** Verfahren nach Anspruch 7, wobei das Laminat (1) ferner eine Nahinfrarot-Absorptionsdeckschicht (11, 12) umfasst, die das Nahinfrarot-Absorptionsmaterial enthält, wobei die Nahinfrarot-Absorptionsdeckschicht (11, 12) auf überlappende Weise mit der Nahinfrarot-Absorptionsschicht (10) ausgebildet ist.

**Revendications**

**1.** Un stratifié (1) comprenant :

une couche de matériau de base (8) ;
une couche absorbant le proche infrarouge (10) formée à l'aide d'une composition d'encre absorbant le proche infrarouge qui contient un matériau absorbant le proche infrarouge ;
sachant que
le matériau absorbant le proche infrarouge contient de l'oxyde de tungstène de césium ou l'hexaborure de lanthane, et que, en appliquant une lumière laser sur une partie cible de la couche absorbant le proche infrarouge (10), l'absorbance du proche infrarouge de la partie cible est réduite au moins dans une plage de longueurs d'onde prédéterminée, et
une couche de couverture ou encore de revêtement (*oversheet layer*) (11, 12) transparente au proche infrarouge, la couche de revêtement (11, 12) étant formée de manière à chevaucher la couche absorbant le proche infrarouge (10),
**caractérisé en ce que**
une pluralité de portions d'éléments optiques convexes (20) sont formées dans une zone sur une surface de la couche de revêtement (11, 12) sur un côté opposé à la couche absorbant le proche infrarouge (10), ladite zone chevauchant au moins partiellement la couche absorbant le proche infrarouge (10).

**2.** Le stratifié (1) d'après la revendication 1, sachant que, sur la couche de matériau de base (8), une impression utilisant une composition d'encre colorée transmettant le proche infrarouge ou d'une composition d'encre fluorescente est réalisée de façon que l'impression chevauche au moins partiellement la couche absorbant le proche infrarouge (10).

**3.** Le stratifié (1) d'après la revendication 1 ou 2, sachant que la composition d'encre absorbant le proche infrarouge inclut une composition d'encre colorée ou une composition d'encre fluorescente qui contient le matériau absorbant le proche infrarouge.

**4.** Le stratifié (1) d'après l'une quelconque des revendications de 1 à 3, comprenant en outre une couche d'hologramme transmettant le proche infrarouge (9) formée de manière que la couche d'hologramme (9) chevauche au moins partiellement la couche absorbant le proche infrarouge (10).

**5.** Le stratifié (1) d'après l'une quelconque des revendications de 1 à 4, sachant que la couche de matériau de base (8) contient le matériau absorbant le proche infrarouge.

**6.** Le stratifié (1) d'après la revendication 1, comprenant en outre une couche de revêtement absorbant le proche infrarouge (11, 12) qui contient le matériau absorbant le proche infrarouge, la couche de revêtement absorbant le proche infrarouge (11, 12) étant formée de manière à chevaucher la couche absorbant le proche infrarouge (10).

**7.** Un procédé **caractérisé en ce qu'**il concerne un stratifié (1) comprenant :

une couche de matériau de base (8), et
une couche absorbant le proche infrarouge (10) formée avec une composition d'encre absorbant le proche infrarouge qui contient un matériau absorbant le proche infrarouge, le matériau absorbant le proche infrarouge contenant de l'oxyde de tungstène de césium ou l'hexaborure de lanthane,
sachant qu'une lumière laser est appliquée sur une partie cible de la couche absorbant le proche infrarouge (10) de manière à réduire l'absorbance dans le proche infrarouge de la partie cible au moins dans une plage de longueurs d'onde prédéterminée, sachant que le stratifié (1) comprend en outre une couche de couverture ou encore de revêtement (*oversheet layer*) (11, 12) transparente dans le proche infrarouge, la couche de revêtement (11, 12) étant formée de manière à chevaucher la couche absorbant le proche infrarouge (10), et
sachant qu'une pluralité de portions d'éléments optiques convexes (20) sont formées dans une zone sur une surface de la couche de revêtement (11, 12) du stratifié (1) sur un côté opposé à la couche absorbant le proche infrarouge (10), la zone chevauchant au moins partiellement la couche absorbant le proche infrarouge (10).

**8.** Le procédé d'après la revendication 7, sachant que la lumière laser est appliquée sur la partie cible de manière qu'une réflectance de ladite partie cible pour le rayonnement proche infrarouge au moins dans une plage de longueurs d'onde prédéterminée soit augmenté de 5 % ou plus.

**9.** Le procédé d'après la revendication 7 ou 8, sachant que, sur la couche de matériau de base (8) du stratifié, une impression utilisant une composition d'encre colorée transmettant le proche infrarouge ou une composition d'encre fluorescente est réalisée de manière que l'impression chevauche au moins partiellement la couche absorbant le proche infrarouge (10).

**10.** Le procédé d'après l'une quelconque des revendications de 7 à 9, sachant que la composition d'encre absorbant le proche infrarouge inclut une composition d'encre colorée ou une composition d'encre fluorescente qui contient le matériau absorbant le proche infrarouge.

**11.** Le procédé d'après l'une quelconque des revendications de 7 à 10, sachant que le stratifié (1) comprend en outre une couche d'hologramme transmettant le proche infrarouge (9) formée de manière que la couche d'hologramme (9) chevauche au moins partiellement la couche absorbant le proche infrarouge (10).

**12.** Le procédé d'après l'une quelconque des revendications de 7 à 11, sachant que la couche de matériau de base (8) contient le matériau absorbant le proche infrarouge.

**13.** Le procédé d'après la revendication 7, sachant que le stratifié (1) comprend en outre une couche de revêtement absorbant le proche infrarouge (11, 12) qui contient le matériau absorbant le proche infrarouge, la couche de revêtement absorbant le proche infrarouge (11, 12) étant formée de manière à chevaucher la couche absorbant le proche infrarouge (10).

FIG.1

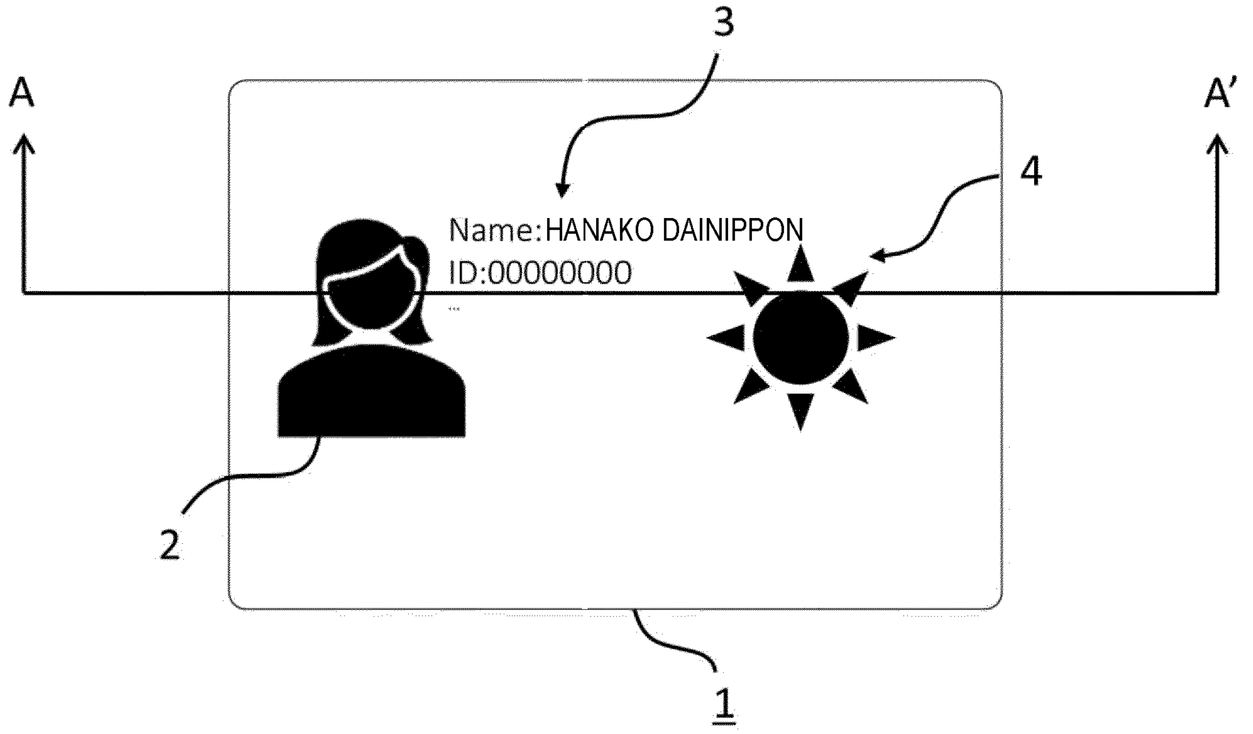

FIG.2

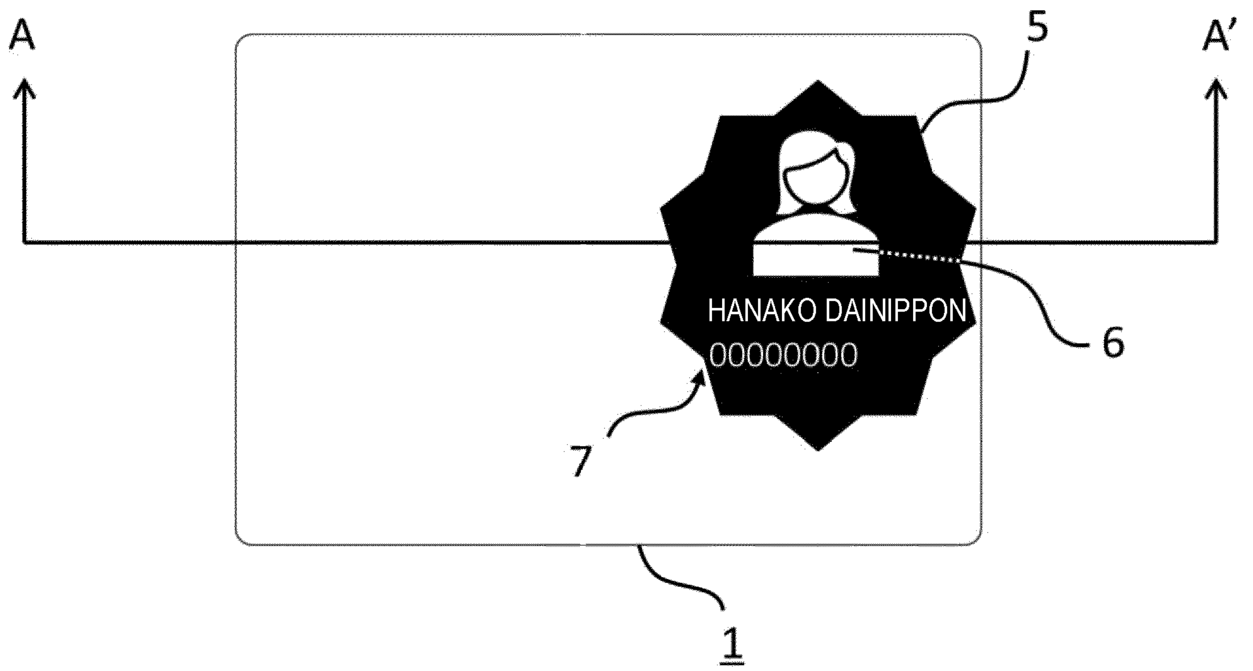

FIG.3

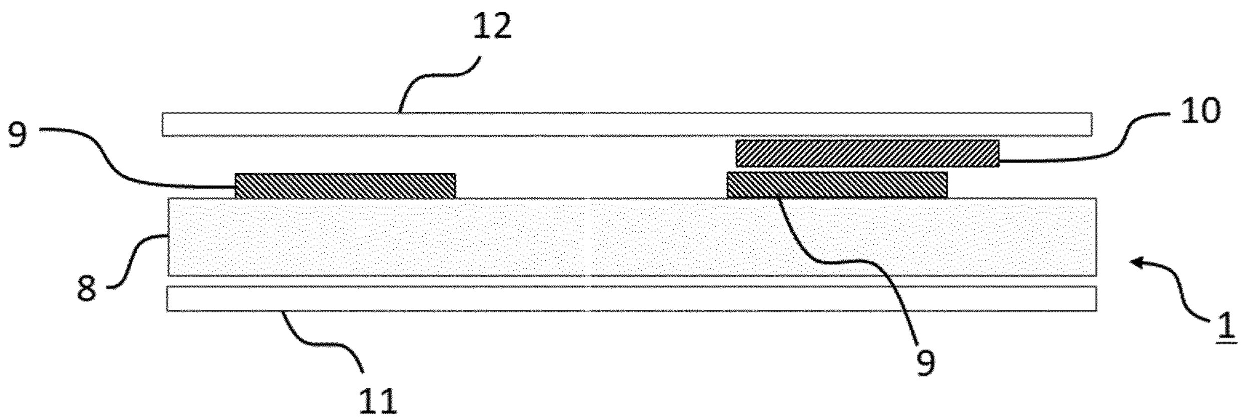


FIG.4

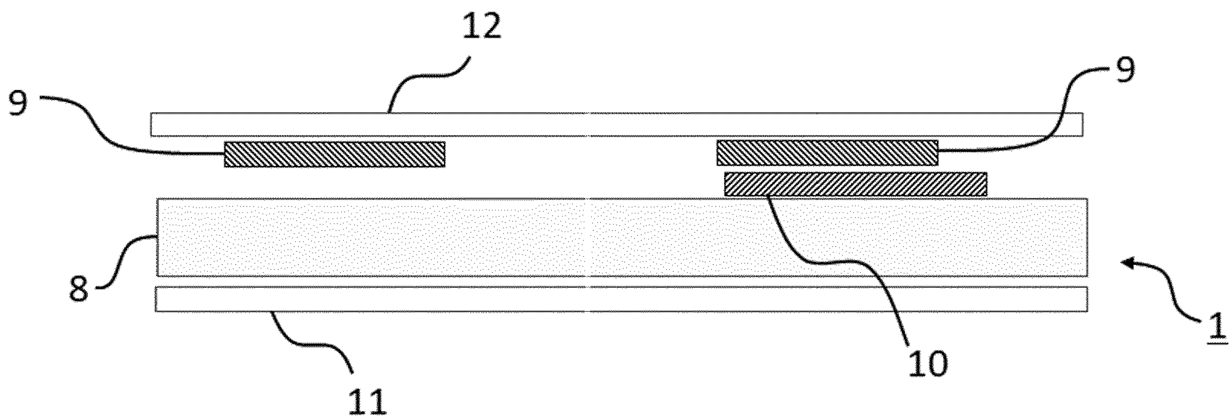

FIG.5

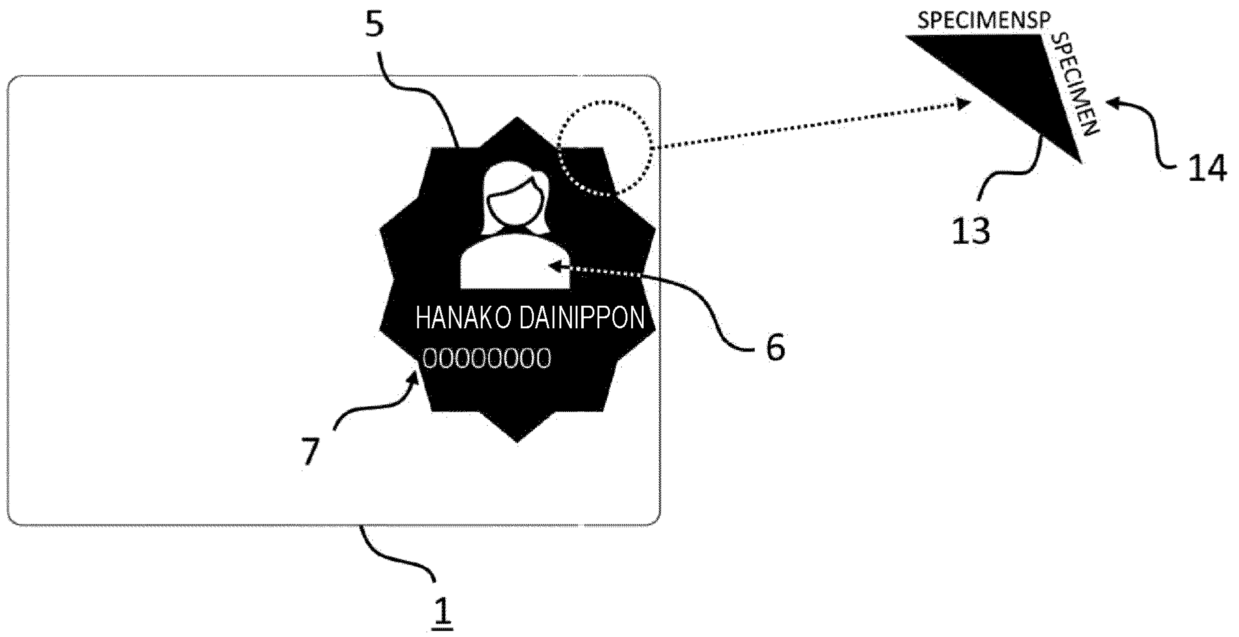
5
SPECIMENSP
SPECIMEN
14
13
HANAKO DAINIPPON
00000000
6
7
1

FIG.6

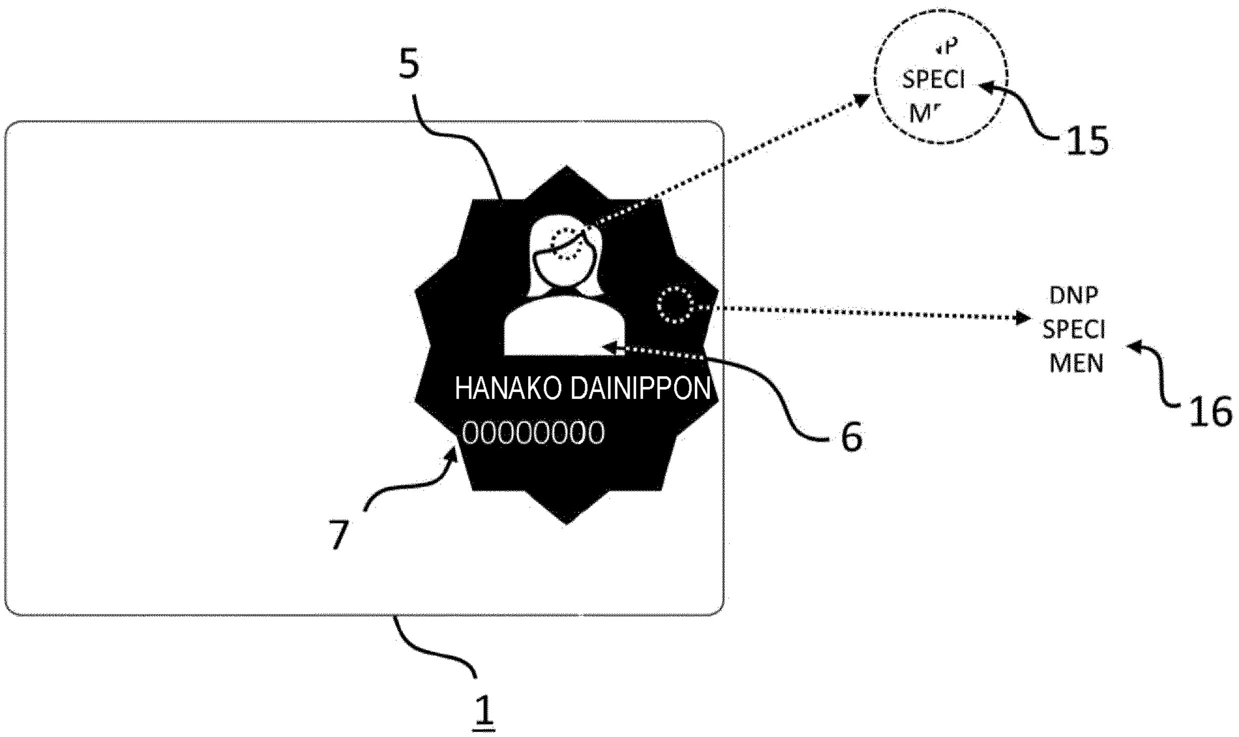
5
SPECI
15
DNP
SPECI
MEN
16
HANAKO DAINIPPON
00000000
6
7
1

FIG.7

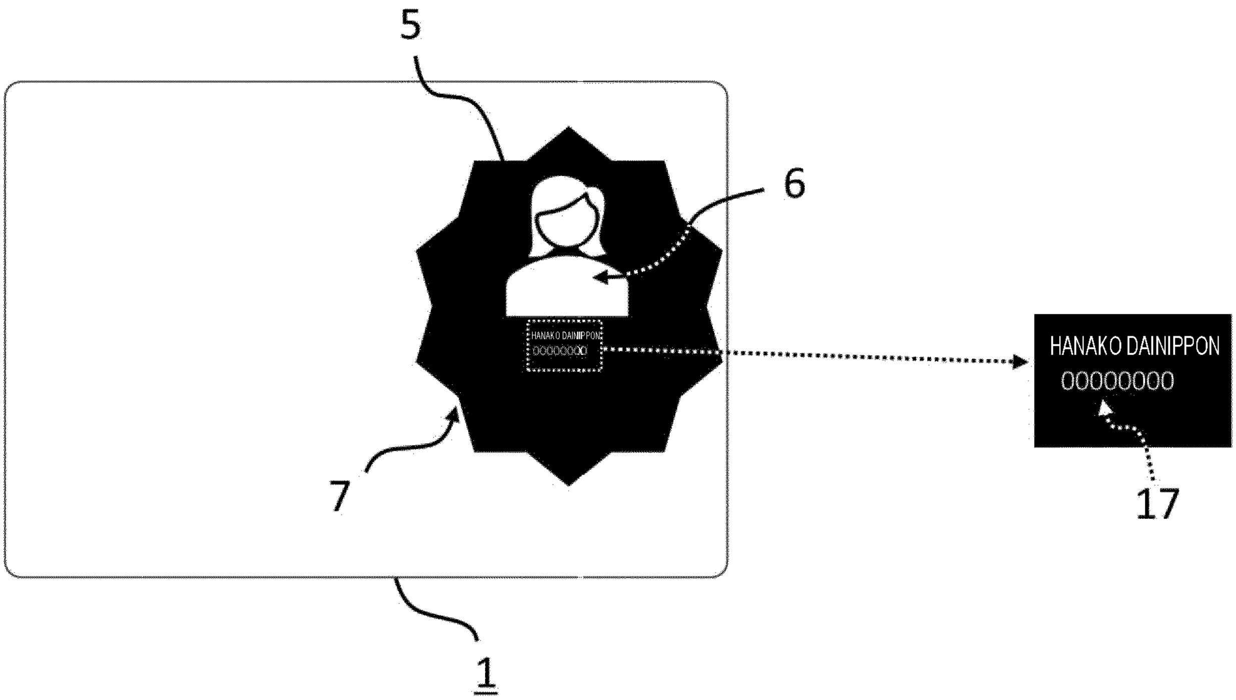
5
6
HANAKO DAINIPPON
00000000
7
HANAKO DAINIPPON
00000000
17
1

FIG.8

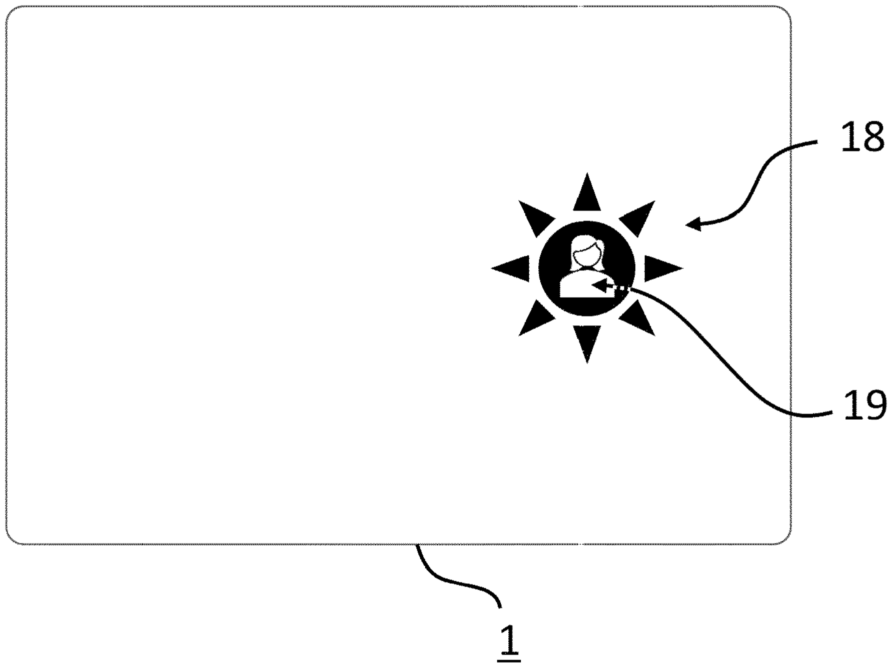
18
19
1

FIG. 9

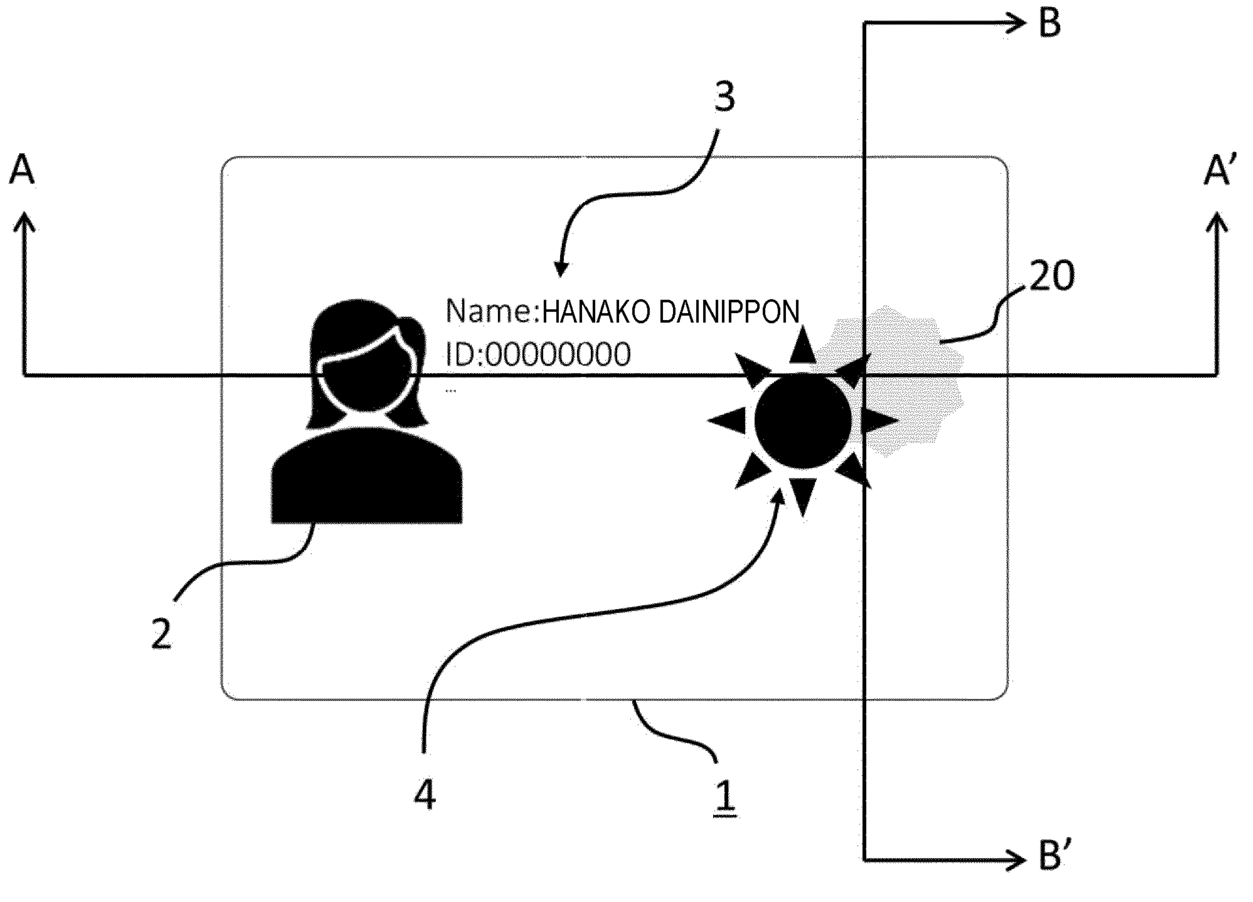

FIG.10

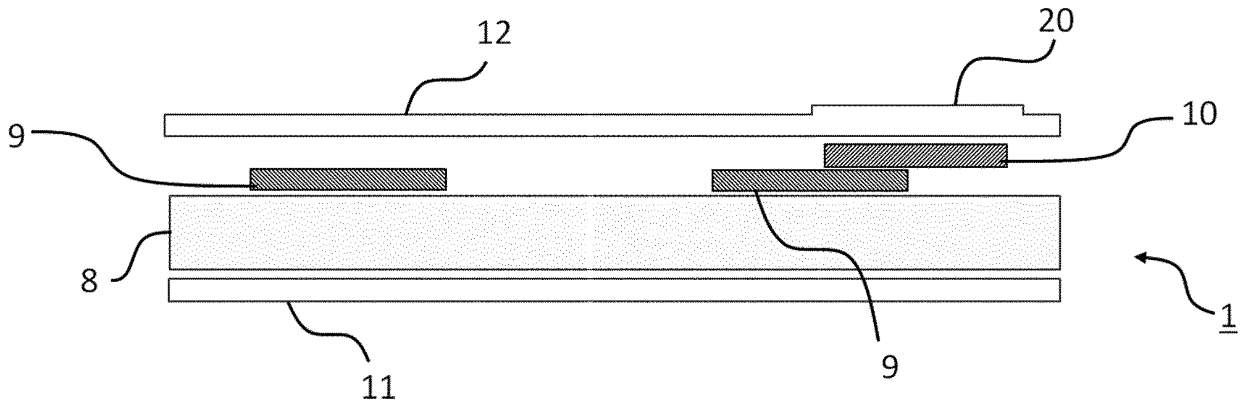


FIG.11

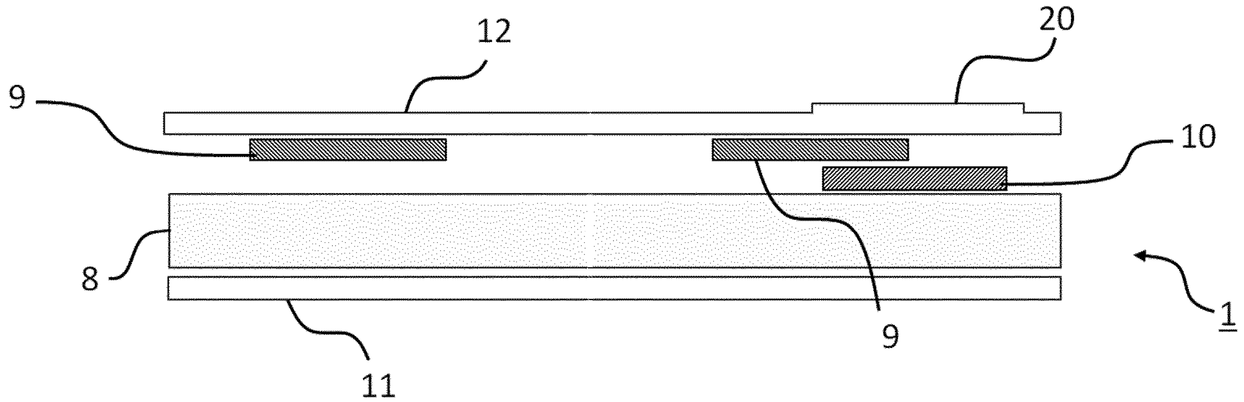

FIG.12

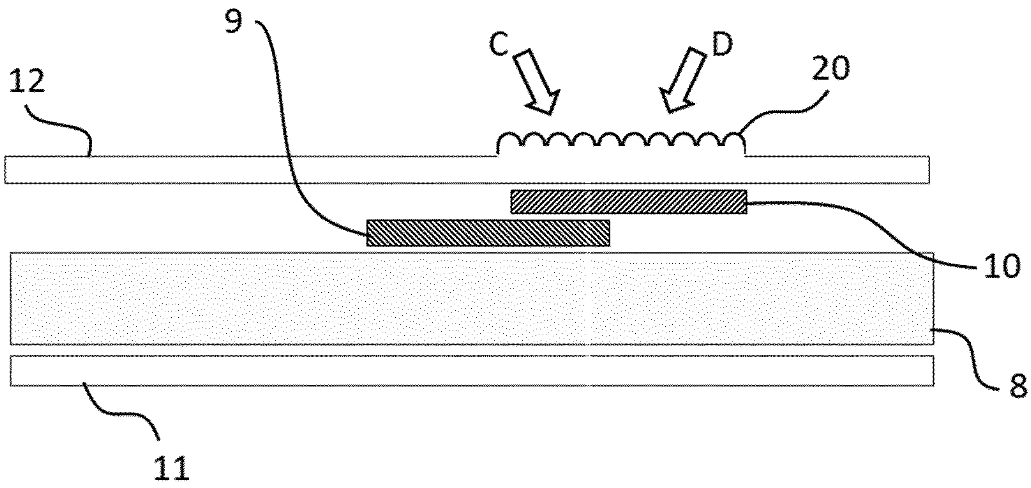

FIG.13

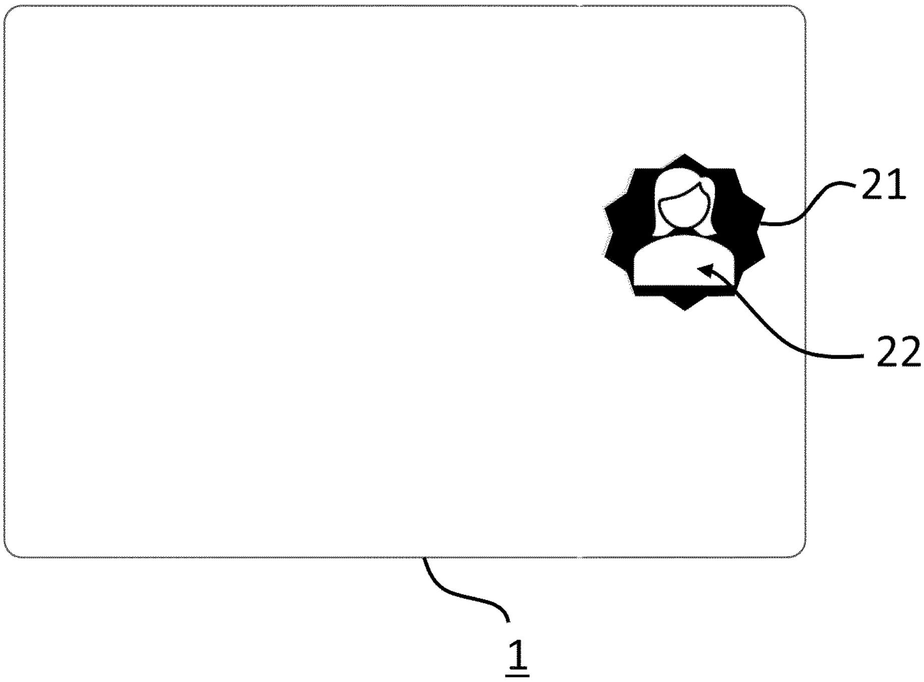


FIG.14

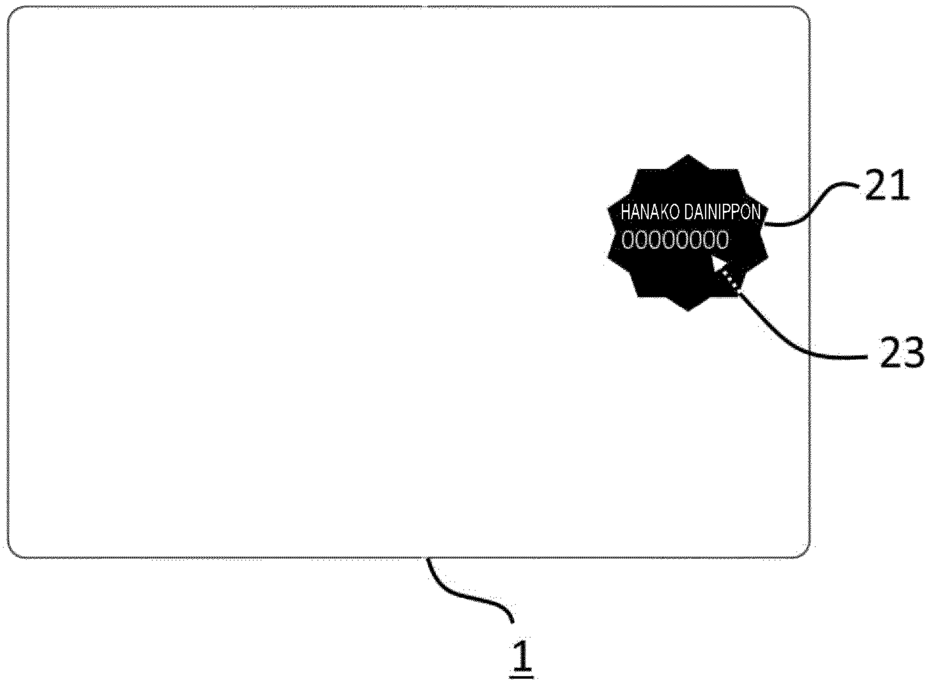

FIG.15

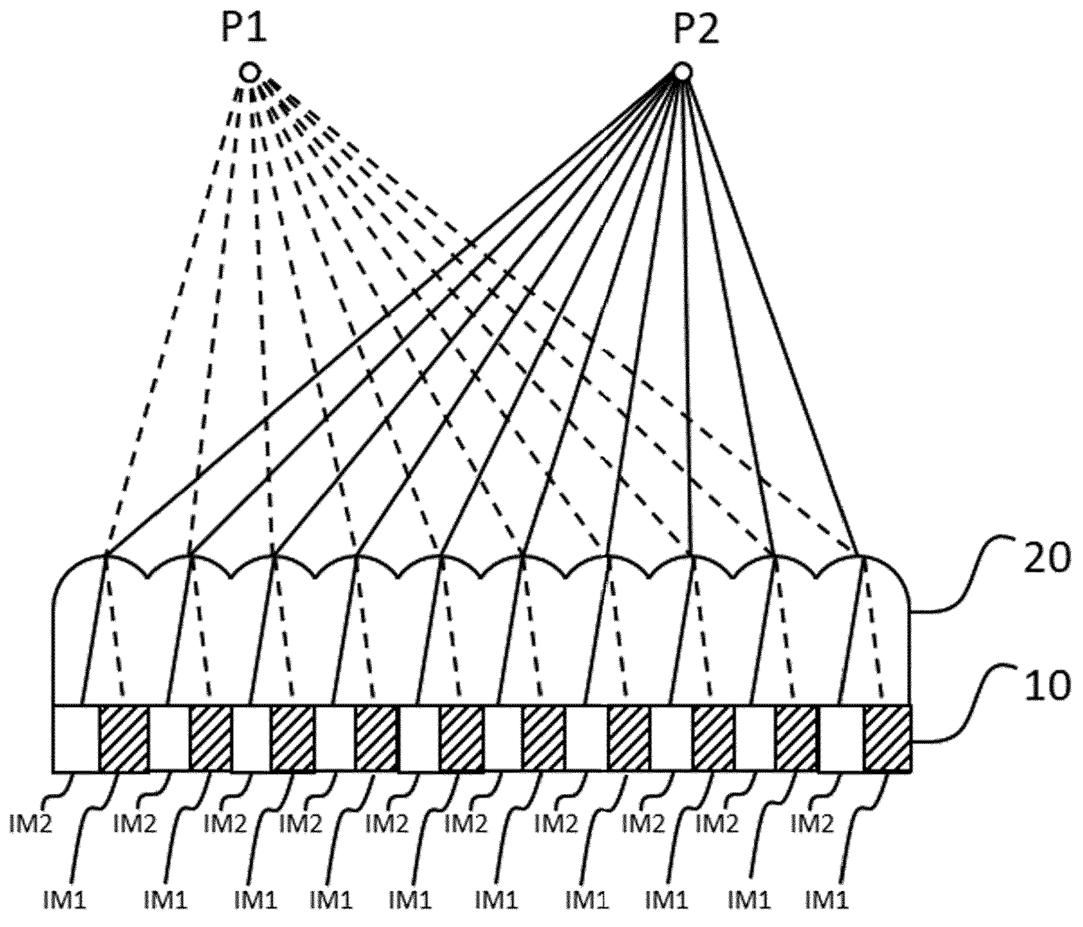
P1
P2
20
10
IM2
IM2
IM2
IM2
IM2
IM2
IM2
IM2
IM2
IM2
IM1
IM1
IM1
IM1
IM1
IM1
IM1
IM1
IM1
IM1

FIG.16

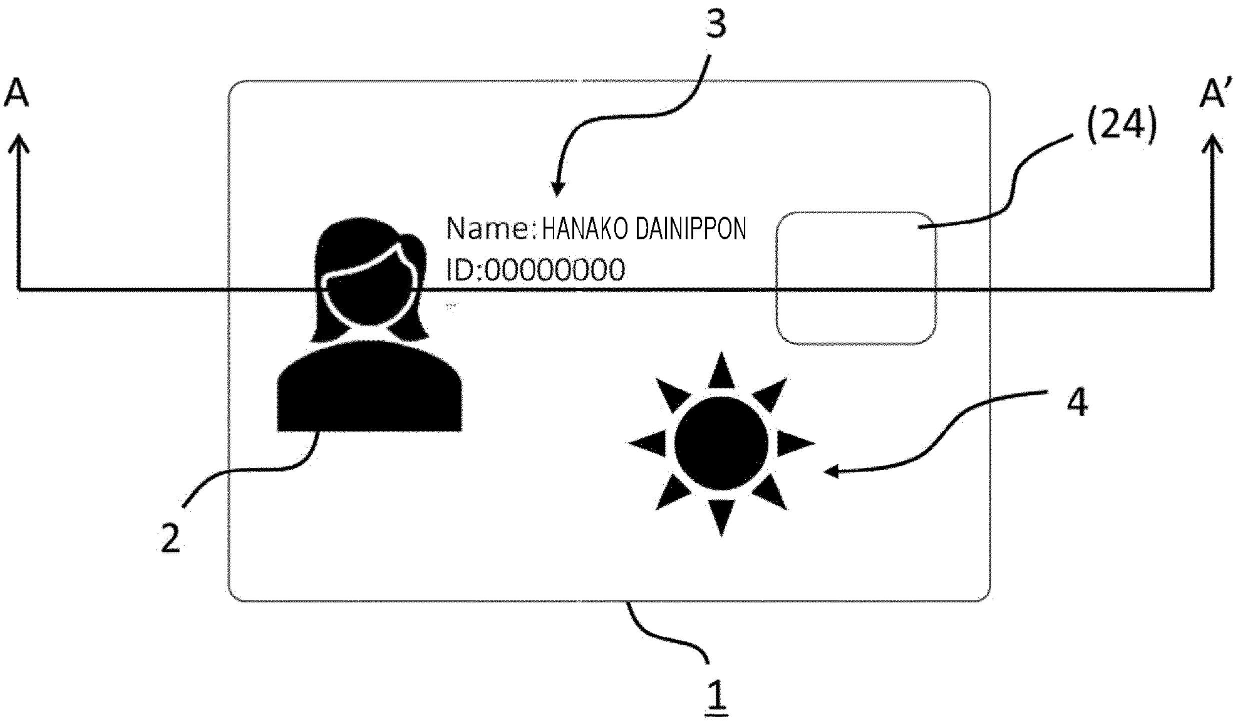

FIG.17

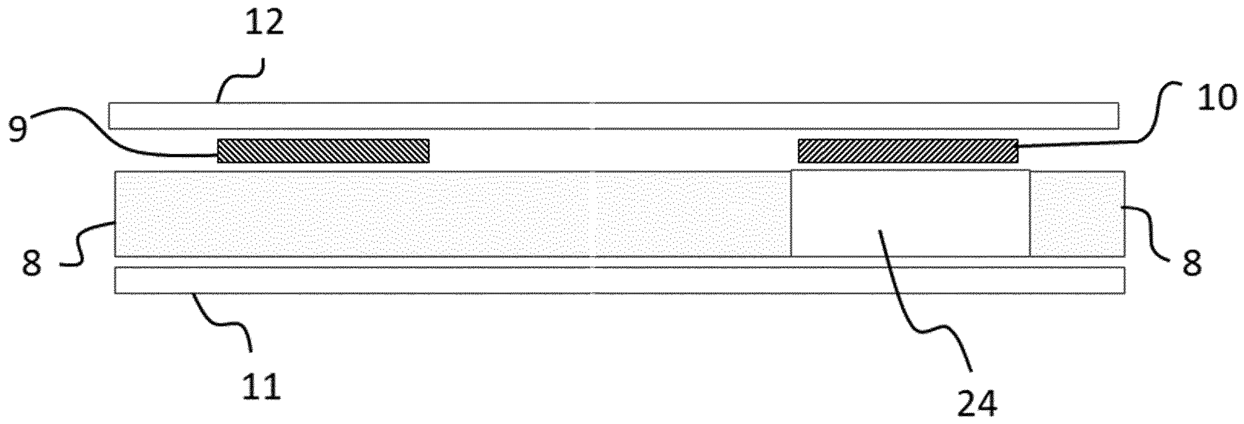


FIG.18

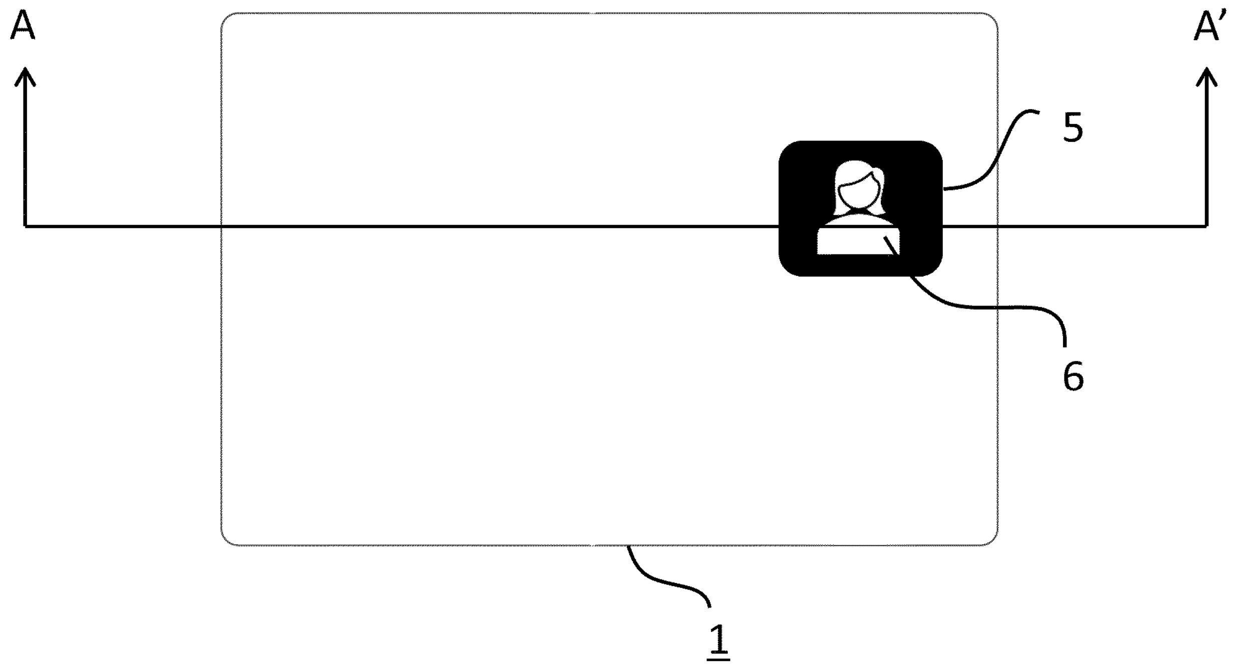

FIG.19

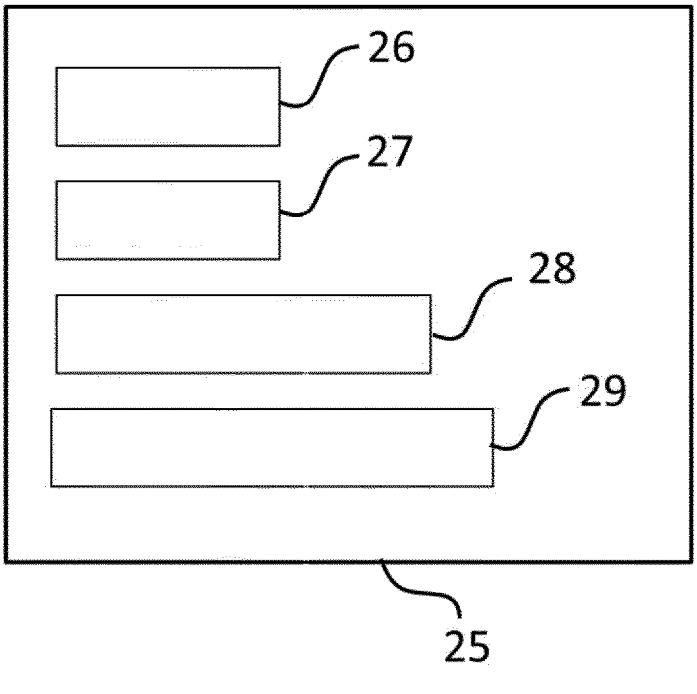

FIG. 20

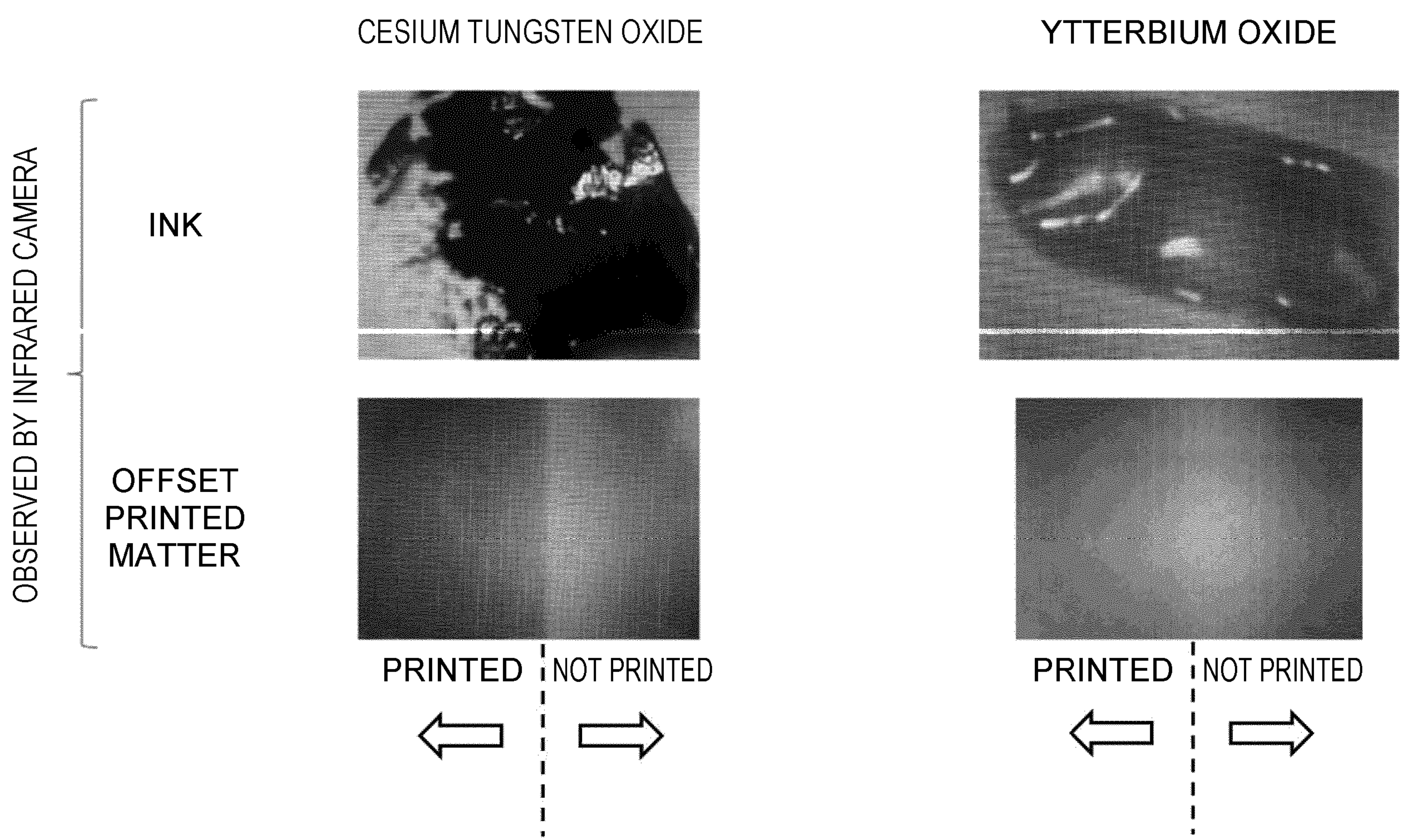
CESIUM TUNGSTEN OXIDE
YTTERBIUM OXIDE
OBSERVED BY INFRARED CAMERA
INK
OFFSET PRINTED MATTER
PRINTED
NOT PRINTED
PRINTED
NOT PRINTED

FIG. 21

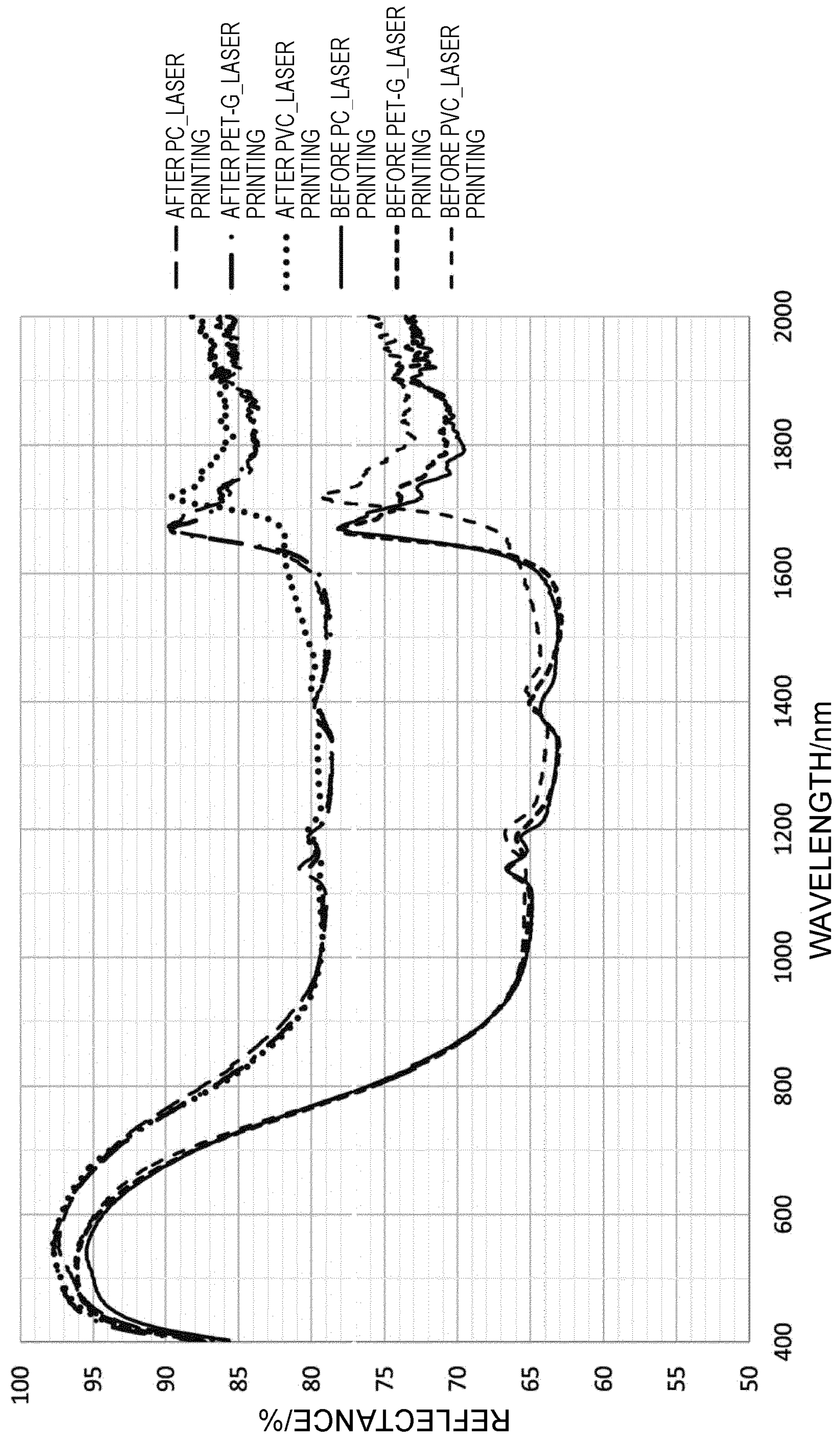
AFTER PC_LASER PRINTING
AFTER PET-G_LASER PRINTING
AFTER PVC_LASER PRINTING
BEFORE PC_LASER PRINTING
BEFORE PET-G_LASER PRINTING
BEFORE PVC_LASER PRINTING
REFLECTANCE/%
WAVELENGTH/nm
100
95
90
85
80
75
70
65
60
55
50
400
600
800
1000
1200
1400
1600
1800
2000

FIG. 22

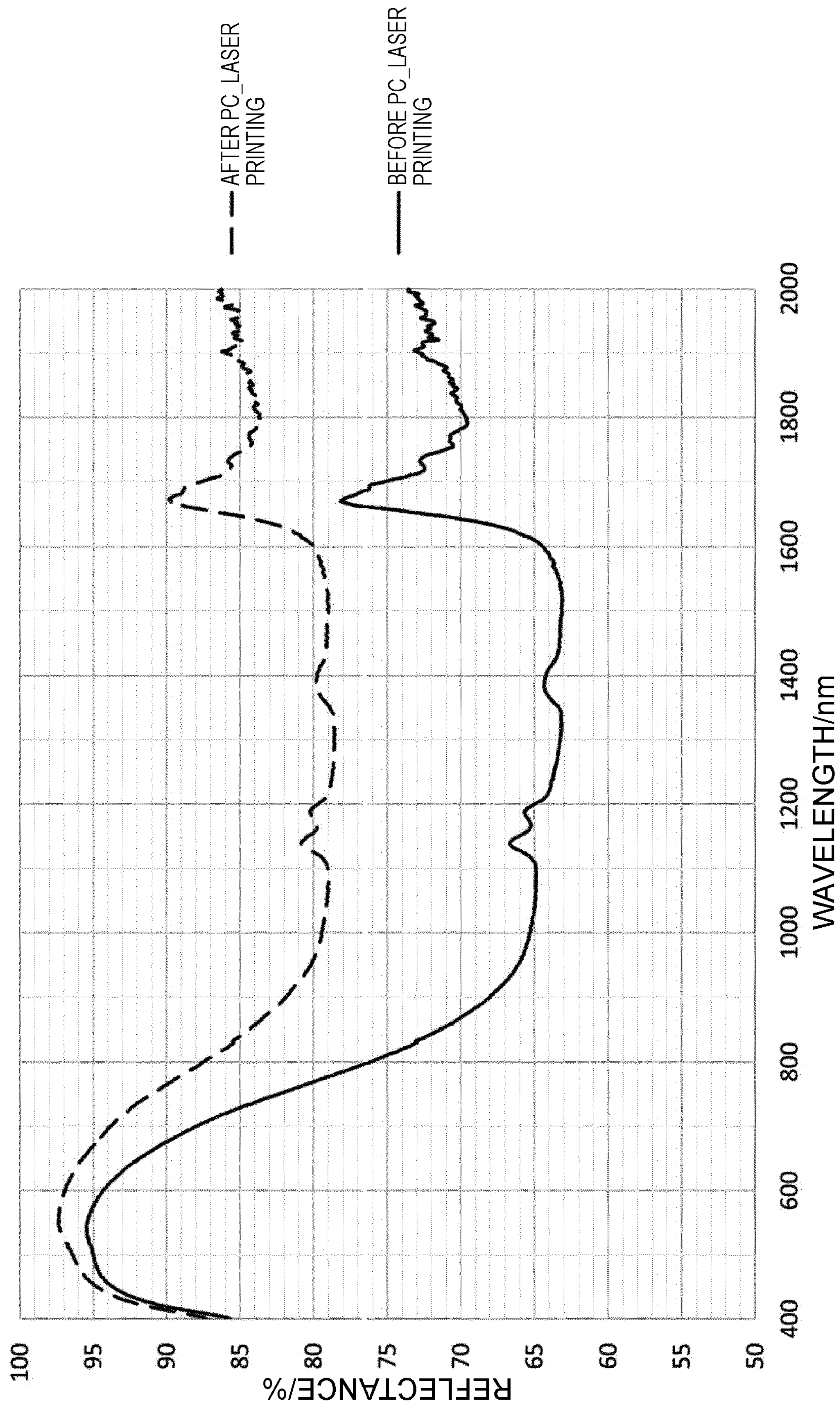
AFTER PC_LASER PRINTING
BEFORE PC_LASER PRINTING
REFLECTANCE/%
100
95
90
85
80
75
70
65
60
55
50
WAVELENGTH/nm
400
600
800
1000
1200
1400
1600
1800
2000

FIG. 23

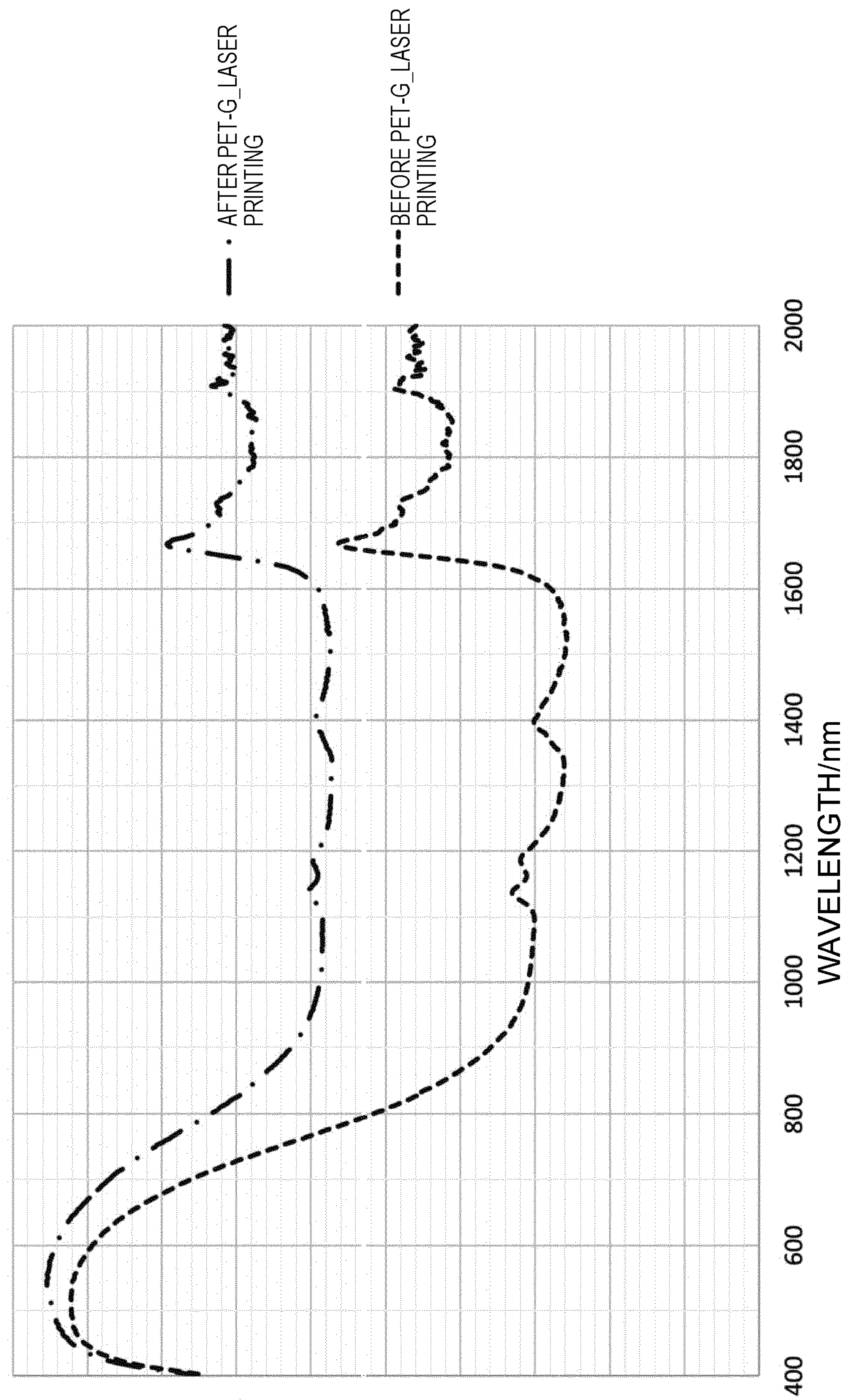
AFTER PET-G_LASER PRINTING
BEFORE PET-G_LASER PRINTING
REFLECTANCE/%
WAVELENGTH/nm
100
95
90
85
80
75
70
65
60
55
50
400
600
800
1000
1200
1400
1600
1800
2000

FIG. 24

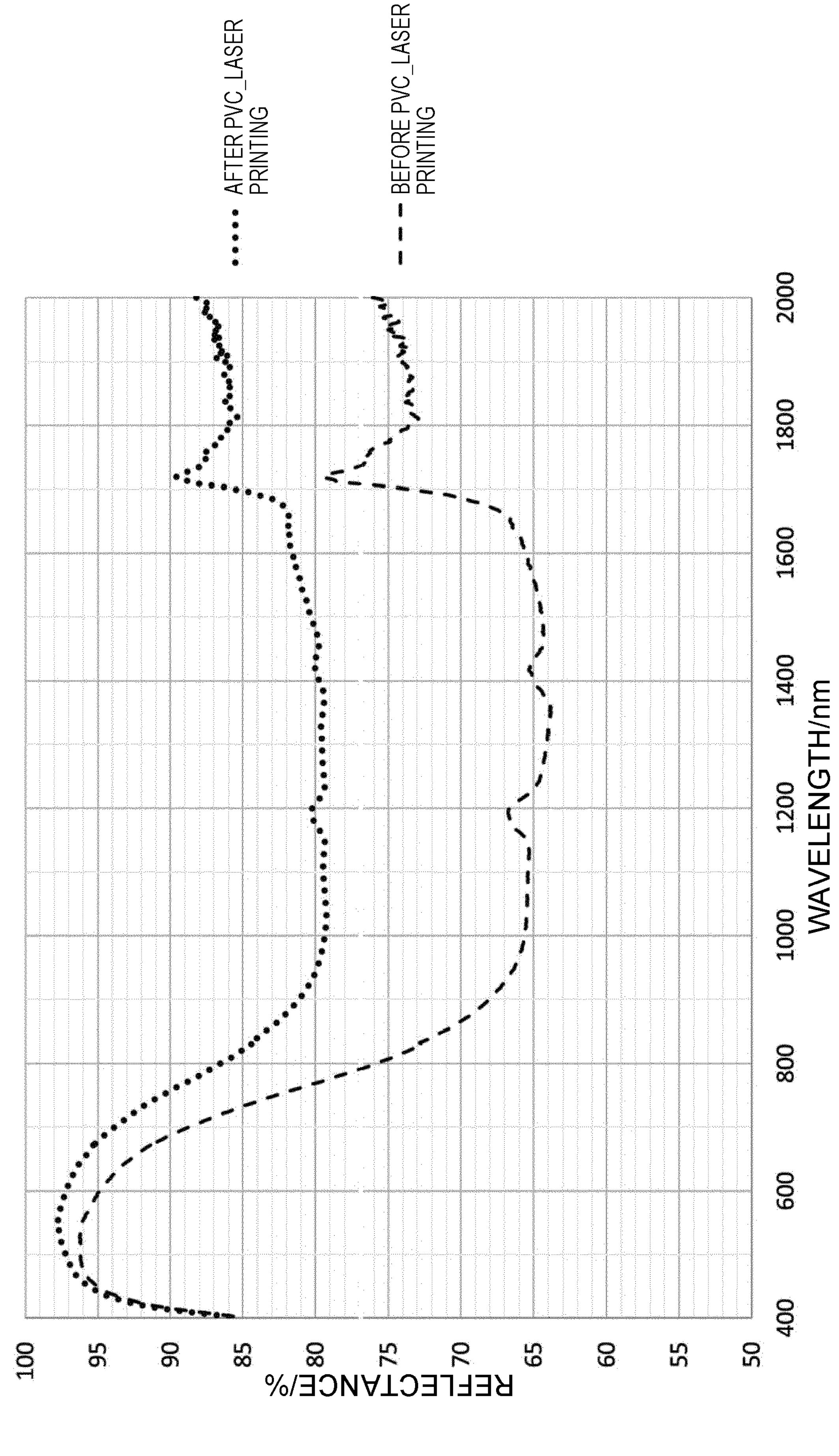
AFTER PVC_LASER PRINTING
BEFORE PVC_LASER PRINTING
REFLECTANCE/%
100
95
90
85
80
75
70
65
60
55
50
WAVELENGTH/nm
400
600
800
1000
1200
1400
1600
1800
2000

FIG. 25

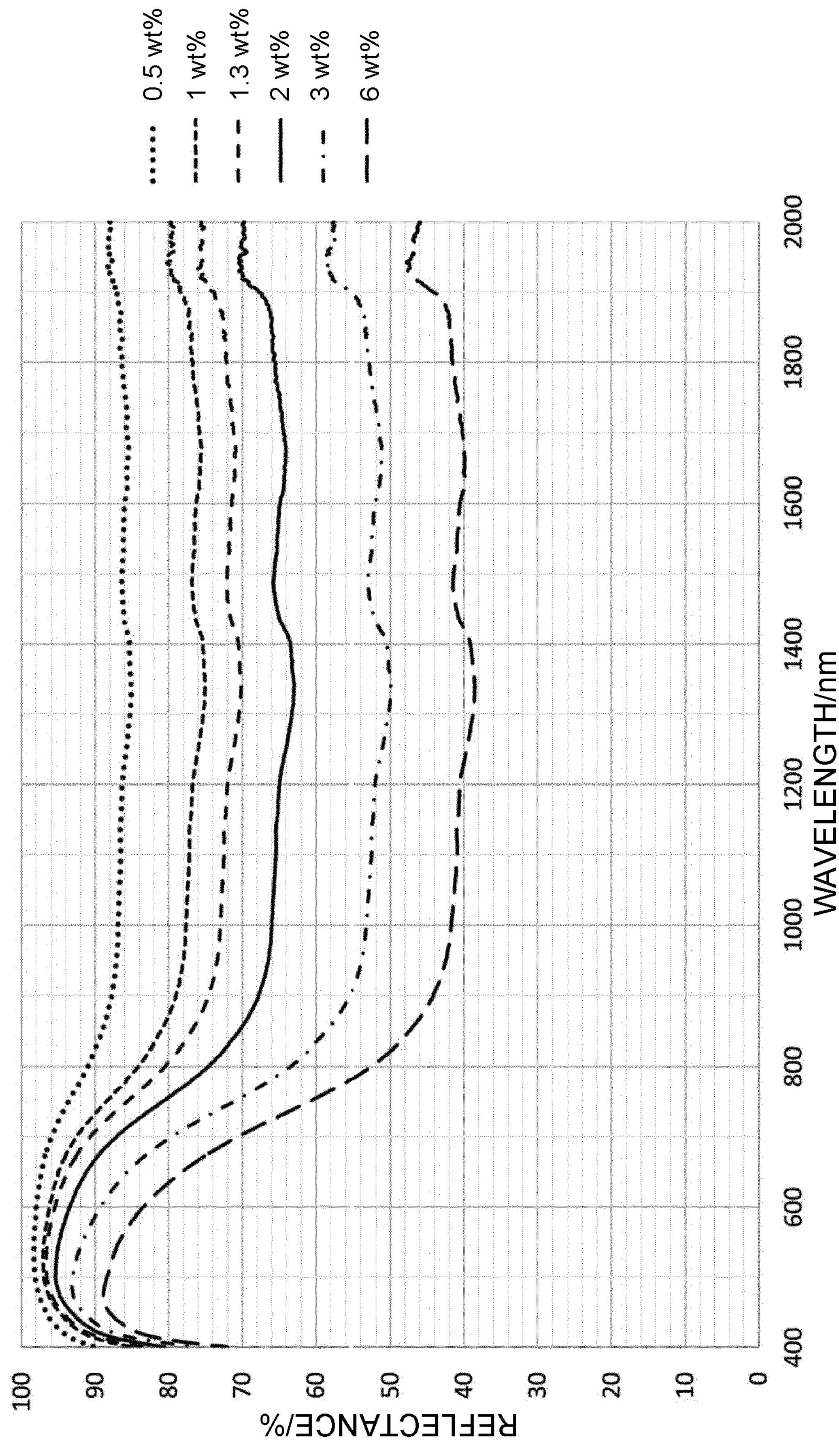
0.5 wt%
1 wt%
1.3 wt%
2 wt%
3 wt%
6 wt%
REFLECTANCE/%
100
90
80
70
60
50
40
30
20
10
0
WAVELENGTH/nm
400
600
800
1000
1200
1400
1600
1800
2000

FIG. 26

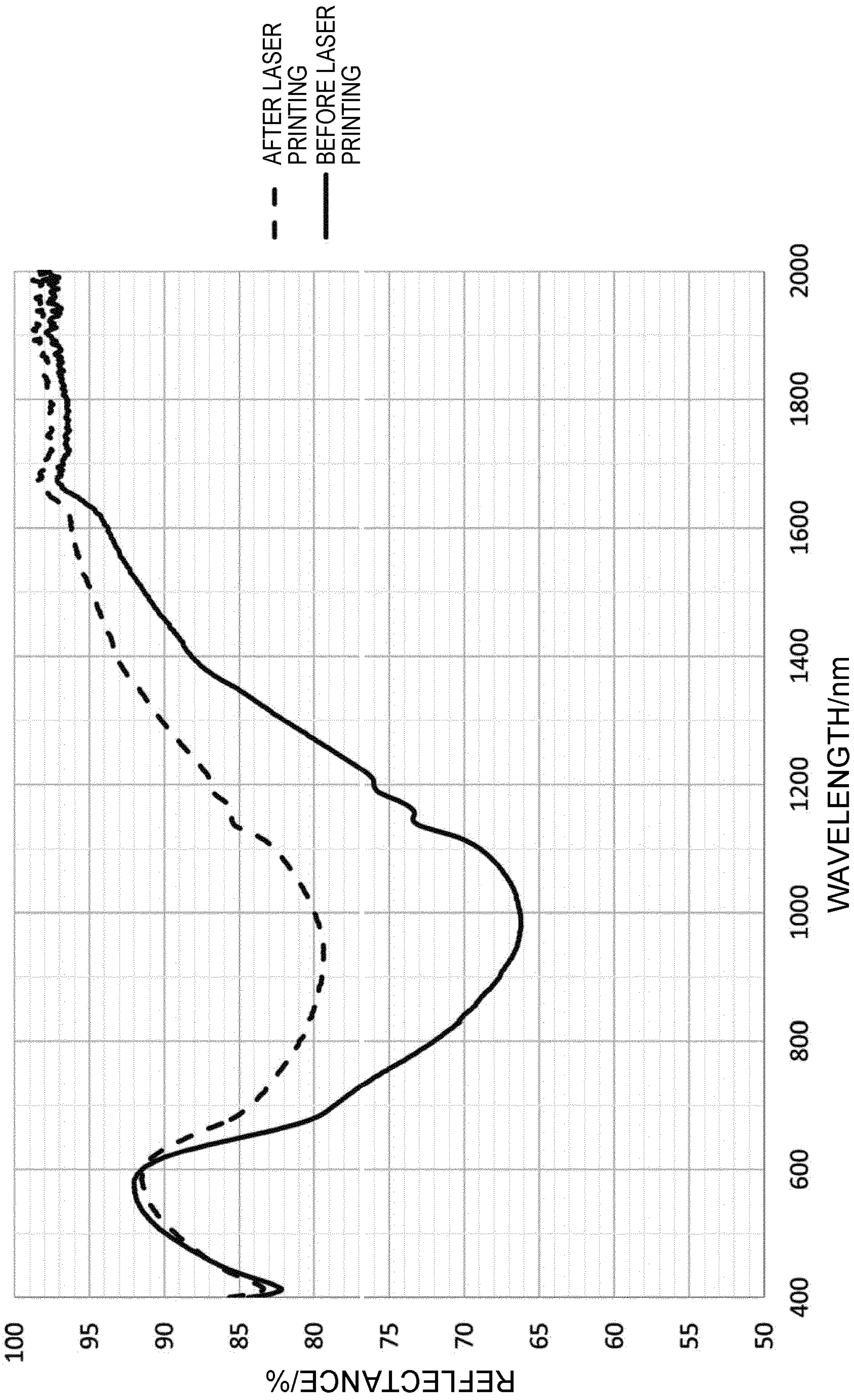
AFTER LASER PRINTING
BEFORE LASER PRINTING
REFLECTANCE/%
100
95
90
85
80
75
70
65
60
55
50
WAVELENGTH/nm
400
600
800
1000
1200
1400
1600
1800
2000

FIG. 27

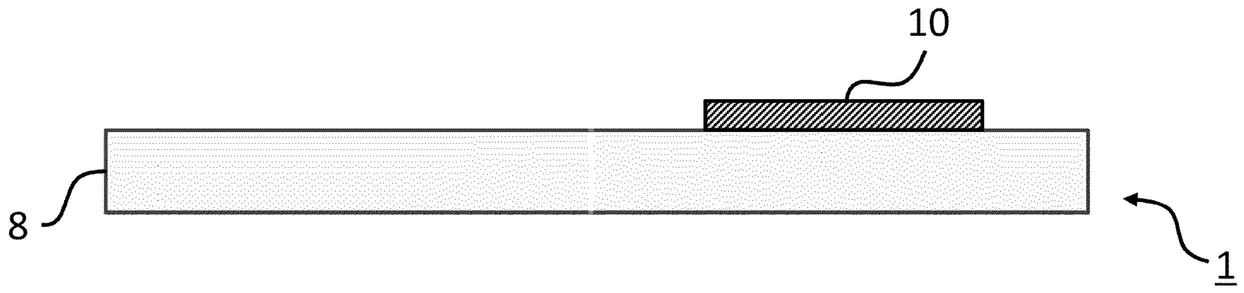


FIG. 28

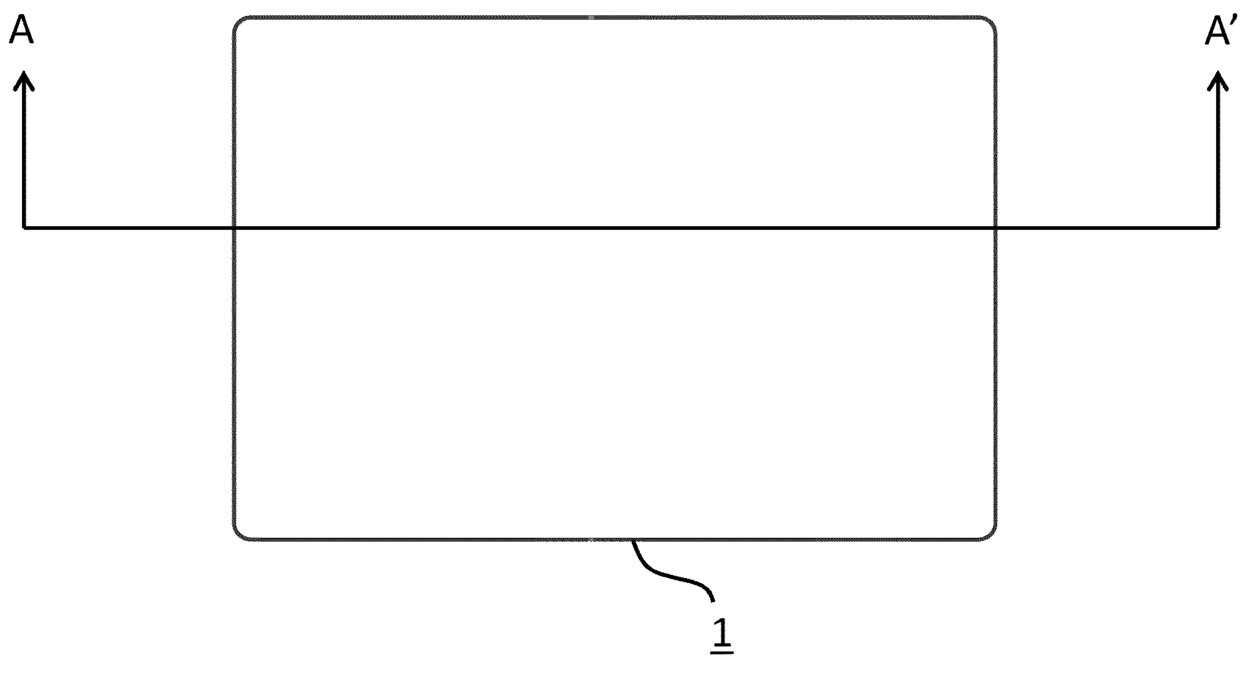

FIG. 29

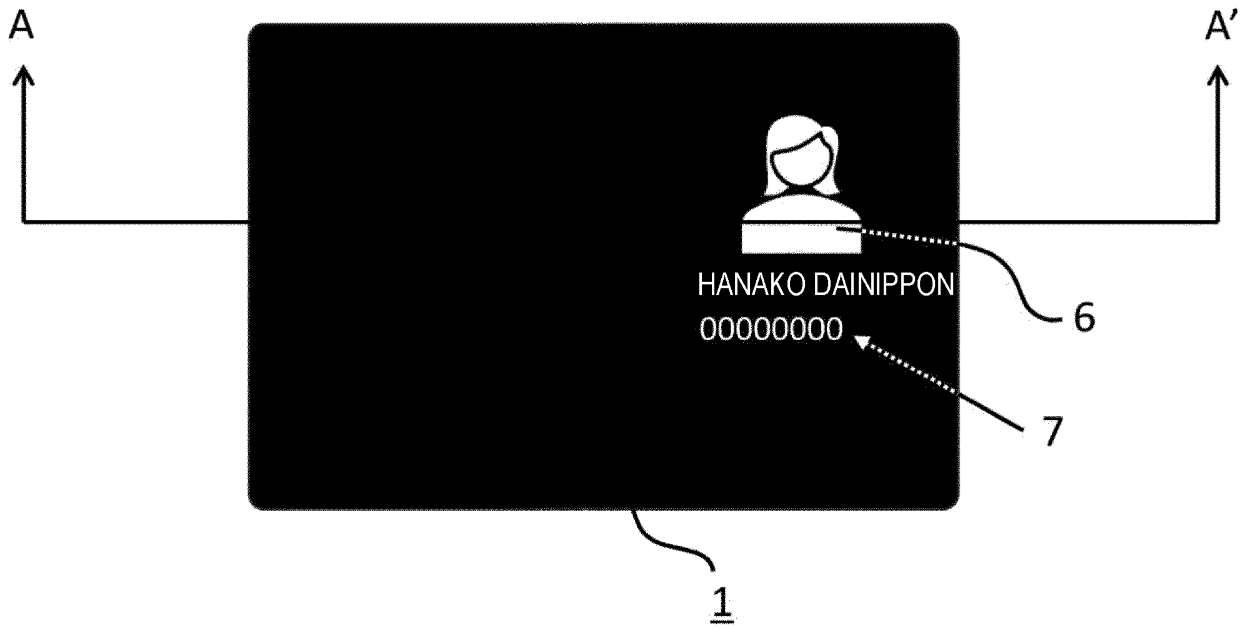

FIG. 30

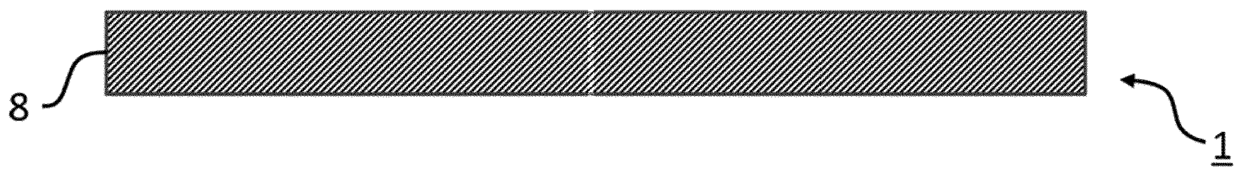


FIG. 31

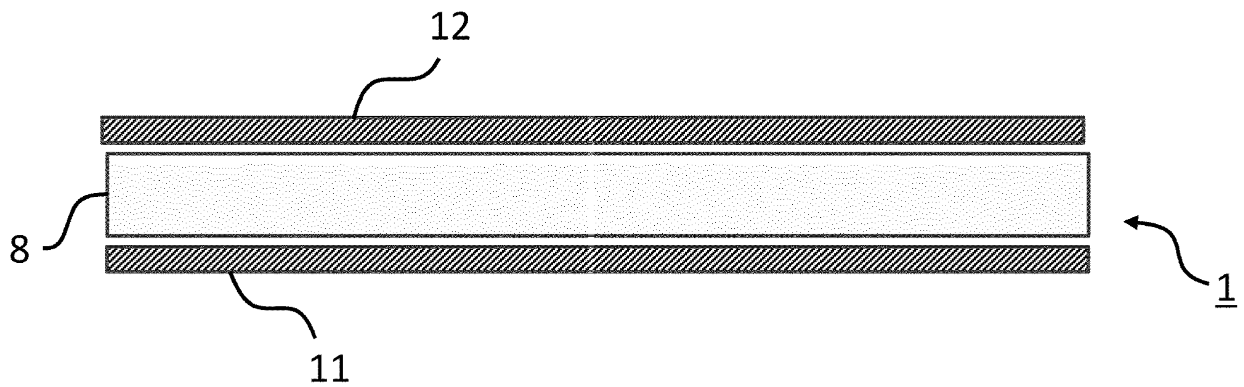

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019038255 A
- US 2017043530 A1
- GB 2574075 A
- JP 4323578 B
- JP 2005505444 W
- JP 2005246821 A
- JP 2008162233 A
- JP 6443597 B
- JP 6507096 B
- JP 6541400 B
- JP 6160830 B
- JP 5854329 B
- WO 2018151238 A
- JP 6167803 B